Europäisches Patentamt

European Patent Office

Office européen des brevets

(19)

(11) **EP 0 712 072 B1**

(12) # FASCICULE DE BREVET EUROPEEN

(45) Date de publication et mention
de la délivrance du brevet:
**16.12.1998 Bulletin 1998/51**

(51) Int Cl.⁶: **G06F 7/72**

(21) Numéro de dépôt: **95470039.9**

(22) Date de dépôt: **26.10.1995**

(54) **Procédé de mise en oeuvre de réduction modulaire selon la méthode de Montgomery**

Verfahren zur Ausführung von modularen Reduktion nach der Montgomery-Methode

Method for the implementation of Montgomery modular reduction

(84) Etats contractants désignés:
**DE FR GB IT**

(30) Priorité: **08.11.1994 FR 9413595**

(43) Date de publication de la demande:
**15.05.1996 Bulletin 1996/20**

(73) Titulaire: **SGS-THOMSON MICROELECTRONICS S.A.**
**94250 Gentilly (FR)**

(72) Inventeur: **Monier, Guy**
**F-57000 Metz (FR)**

(74) Mandataire: **Schmit, Christian Norbert Marie**
**Cabinet Ballot-Schmit,**
**18 Place du Forum**
**57000 Metz (FR)**

(56) Documents cités:
• **IEE PROCEEDINGS E COMPUTERS & DIGITAL TECHNIQUES., vol. 141, no. 5, Septembre 1994 STEVENAGE GB, pages 314-316, KOC 'Montgomery reduction with even modulus'**

## Description

L'invention concerne un procédé de mise en oeuvre de réduction modulaire selon la méthode de Montgomery. Cette méthode permet de mettre en oeuvre des calculs modulaires dans un corps fini $GF(2^n)$ (corps de Gallois), sans effectuer de divisions.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrits par exemple dans la demande de brevet français publiée sous le numéro 2 679 054.

On trouve dans le commerce des circuits intégrés dédiés à de telles applications, par exemple le produit fabriqué par SGS-THOMSON MICROELECTRONICS S.A. et référencé ST16CF54, bâti autour d'une association de type unité centrale - coprocesseur arithmétique, et dédié traitement de calculs modulaires. Le coprocesseur utilisé permet de mettre en oeuvre des opérations modulaires sur des données binaires codées sur m mots de k bits, avec k = 32 et m = 8 ou 16, en utilisant la méthode de Montgomery. Il fait l'objet d'une demande de brevet européen, publiée sous la référence 0 601 907 A2, et est illustré figure 1 (cette figure correspondant à la figure 2 de la demande de brevet européen citée).

L'opération de base, dite $P_{field}$, consiste, à partir de trois données binaires A (multiplicande), B (multiplieur), et N (modulo), codées sur un nombre entier n de bits, à produire une donnée binaire notée $P(A, B)_N$ codée sur n bits, telle que $P(A, B)_N = A * B * I \bmod N$, avec I donnée binaire codée sur n bits tels que $I = 2^{-n} \bmod N$. Bien sûr, on aura n = m * k.

Le circuit permet également, par extension, de réaliser une réduction modulaire, c'est à dire de calculer C mod N, avec C donnée binaire codée sur m mots de k bits.

La méthode mise en oeuvre est la suivante :

- production de $H = 2^n \bmod N$,
- production de $P(C, H)_N$.

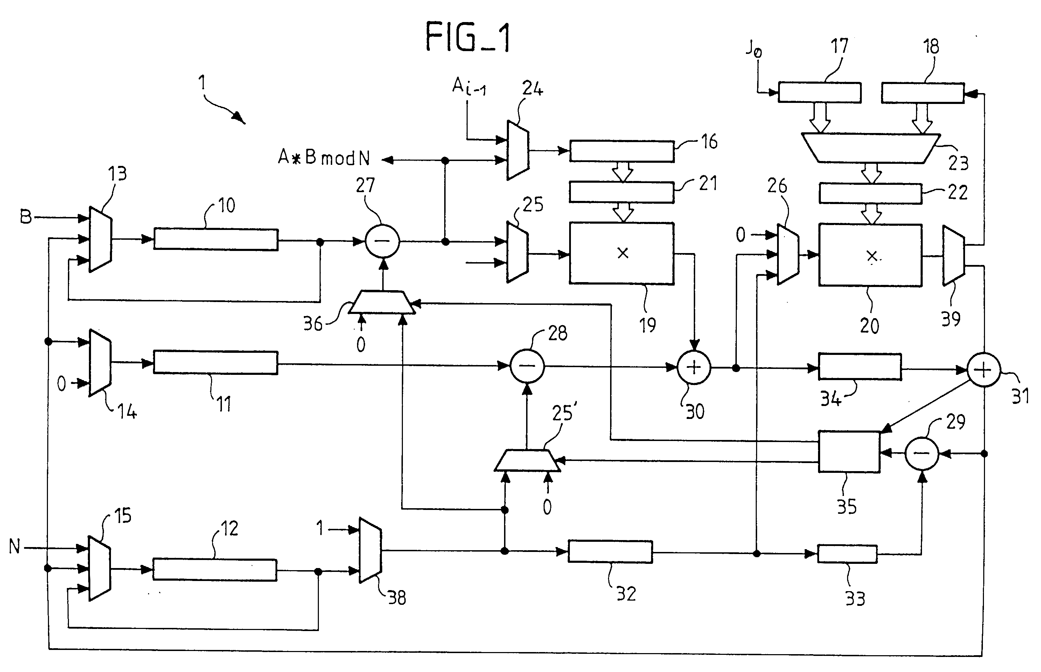

Le procédé de réduction modulaire mis en oeuvre par le circuit illustré figure 1 comporte les étapes suivantes :

1. calcul d'un paramètre H ($H = 2^{m*k} \bmod N$) et d'un paramètre $J_0$ codé sur k bits, avec $J_0 = - N_0^{-1} \bmod 2^k$, $N_0$ étant le mot de poids le plus faible du modulo N, et stockage de $J_0$ dans un registre 17 de k bits,

2. chargement du paramètre H et du modulo N dans des registres respectifs 10 et 12 de n bits, avec n = m * k, et initialisation d'un registre 11 de n bits à zéro, le contenu de ce registre étant noté S, avec S donnée variable binaire codée sur n bits,

3. mise en oeuvre d'une boucle, indicée par i, avec i variant de 1 à m, chaque $i^{\text{ème}}$ itération comprenant les opérations suivantes :

   a) transfert du $i^{\text{ème}}$ mot $C_{i-1}$ de la donnée M d'un registre 16 vers une bascule de mémorisation 21,
   b) production d'une valeur $X(i) = S(i-1) + H * C_{i-1}$ avec $S(0) = 0$ et $S(i-1)$ la valeur dite actualisée de S, définie ci-après, en :

      I - décalant à droite le contenu du registre 10 vers l'entrée d'un premier circuit de multiplication 19 série-parallèle, avec rebouclage de la sortie du registre 10 sur son entrée,
      II - multipliant les bits de H par $C_{i-1}$,
      III - décalant à droite le contenu du registre 12, avec rebouclage de la sortie sur l'entrée,
      IV - déterminant la valeur actualisée de $S(i-1)$ comme étant la valeur stockée dans le registre 11 après la $(i-1)^{\text{ème}}$ itération, si celle ci est inférieure à N, et si elle est plus grande, en soustrayant en série N de celle-ci dans un premier circuit de soustraction série 28, la valeur en résultant étant la valeur actualisée de $S(i-1)$, et
      V - décalant à droite le contenu du registre 11 et additionnant bit à bit la valeur de la multiplication $H * C_{i-1}$ avec la valeur actualisée de $S(i-1)$ dans un premier circuit d'addition série 30;

   c) multiplication du mot le moins significatif de X(i), $X_0(i)$, par $J_0$, dans un deuxième circuit de multiplication 20 série-parallèle, et entrée de la valeur $X_0(i) * J_0 \bmod 2^k = Y_0(i)$ dans un registre 18, et simultanément retarder N et X(i) de k cycles dans des circuits de retard 32 et 34;
   d) calcul d'une valeur $Z(i) = X(i) + Y_0(i) * N$ en :

      I - multipliant $Y_0(i)$ par N, retardé de k cycles, dans le deuxième circuit de multiplication 20, et
      II - additionnant X(i) à la valeur $Y_0(i) * N$ dans un second circuit d'addition série 31,

e) ne pas prendre en compte le mot le moins significatif de $Z(i)$ et stocker les mots restants, c'est à dire $Z(i)/2^k$, dans le registre 11,

f) comparer $Z(i)/2^k$ à $N$, bit à bit, dans le but de déterminer la valeur actualisée $S(i)$ de l'itération suivante, de la manière décrite ci-dessus, cette comparaison se faisant en soustrayant bit à bit $Z(i)/2^k$ et $N$ dans un deuxième circuit de soustraction série 29, $N$ ayant été retardé de $k$ cycles supplémentaires,

g) le $i^{ème}$ mot du multiplicande $C$ étant chargé dans le registre 16 à un instant quelconque pendant les opérations ci-dessus;

4. à la $m^{ème}$ itération, ignorer le mot le moins significatif de $Z(m)$ et entrer les mots restants, c'est à dire $Z(m)/2^k$, dans le registre 10,

5. sortie du résultat stocké dans le registre 10 à la dernière itération, éventuellement soustrait de $N$, par le biais d'un troisième circuit de soustraction série 27, si $Z(m)/2^k \geq N$.

Globalement, en appelant temps de cycle, ou cycle, la période du signal d'horloge synchronisant le fonctionnement du circuit de la figure 1, le temps nécessaire au traitement d'une réduction modulaire peut de décomposer principalement en :

- $n * (n + 1)$ temps de cycle pour le calcul de $H$,
- $n$ temps de cycle pour l'étape 2,
- $m * (n + 2 * k + x)$ temps de cycle pour les étapes 3 et 4 réunies, avec $x$ un entier,
- $n$ temps de cycle pour l'étape 5.

En pratique, $x$ est fonction de l'initialisation du circuit, c'est à dire principalement de l'établissement de signaux de commande (de multiplexeurs par exemple) pour assurer un fonctionnement cohérent du circuit. En pratique on pourra considérer par exemple que $x = 7$.

En ce qui concerne la première étape, le calcul du paramètre $J_0$ est réalisé par l'unité centrale (méthode logicielle).

On a $H * I^2 = 1 \bmod N$, ce qui permet de fournir un résultat exact, c'est à dire égal à $C \bmod N$, lors de l'étape 5 du procédé de multiplication modulaire décrit ci-dessus.

Par ailleurs, le calcul de $H$ est réalisé à l'aide du coprocesseur, selon la méthode suivante, à lire concurremment à la figure 2, cette figure 2 correspondant à la figure 9 de la demande de brevet européen citée.

Pour calculer $H$, on opère de la manière suivante (voir également description pages 20, ligne 47 à page 25, ligne 52 de la demande de brevet européen citée) :

1. chargement de $N$ dans le registre 12, et initialisation du registre 10 à $B(0) = 0$,

2. simultanément :

- décalage à droite et soustraction bit à bit de $B(0)$ et $N$ dans un soustracteur série 27, avec décalage à gauche d'une unité du résultat $R(0) = B(0) - N \bmod 2^{m*k}$, le décalage se faisant dans le soustracteur en sortant un premier bit à 0,
- chargement de $B(1) = 2 * R(0)$ dans le registre 10,
- soustraction bit à bit de $2 * R(0)$ et $N$ pour déterminer si $B(1)$ est $\geq$ ou $<$ à $N$, cette soustraction se faisant dans un deuxième soustracteur 40, avec test dans un circuit 44 du résultat de la soustraction,
- si $B(1) \geq N$ alors chargement de $B(2) = B(1) - N$ dans le registre 10, et sinon $B(2) = B(1)$.

On a $B(2) = H = 2^n \bmod N$

On connaît également d'autres méthodes appliquant la méthode de Montgomery. Dans IEE PROCEDDING E COMPUTERS & DIGITAL TECHNIQUES, vol. 141, N° 5, Sept. 1994 STEVENAGE GB, pages 314 - 316, KOÇ "Montgomery reduction with even modulus", est présentée une méthode utilisable par des ordinateurs mais qui n'est apparemment pas transposable sur des circuits intégrés.

L'inventeur a cherché à améliorer le procédé de réduction modulaire mis en oeuvre dans le document EP 601 907.

En effet, le coprocesseur tel qu'il est utilisé actuellement, présentent des limitations de fonctionnement, notamment :

- il n'est pas possible de traiter des données binaires de tailles différentes de $n$ bits, c'est à dire qu'en pratique on ne tient pas compte de la taille utile des données, et
- il ne met pas en oeuvre d'opérations modulaires avec des modulos pairs, le calcul de $J_0$ n'étant réalisable que si $N_0$ est impair.

L'invention propose d'utiliser l'ensemble unité centrale - coprocesseur de manière à permettre d'éliminer ces limitations.

Procédé de mise en oeuvre de réduction modulaire selon la méthode de Montgomery, dans lequel :

- une donnée binaire C est codée sur un nombre c de bits, regroupés en m' mots de k bits, avec m' et k entiers, m' étant tel que $m' * k \geq c > (m' - 1) * k$,
- une donnée binaire N non nulle est codée sur un nombre n de bits,

caractérisé en ce que pour produire C mod N, on met en oeuvre des étapes de production d'une donnée binaire $J_0(N')$, avec N' une donnée binaire codée sur n bits telle que N' a un bit de poids le plus faible à 1 et $N = N' * 2^a$, avec a entier $\geq 0$, de production d'au moins une donnée binaire H de la forme $2^{f(C, N)}$, avec f (C, N) un entier représentatif de la taille de c et du nombre de bits de poids faible de N qui sont à 0, et de fourniture d'une part de C, à l'entrée parallèle d'un circuit de multiplication ayant une entrée série, une entrée parallèle, et une sortie série, et d'autre part de H à l'entrée série de ce même circuit de multiplication.

L'invention propose également, pour produire C mod N, le bit de poids le plus faible de N étant égal à 0, de réaliser les étapes suivantes :

E1 - production d'une donnée binaire $H = 2^{m'*k-a}$ mod N',
E3 - fourniture de C, codée sur $m' * k$ bits, à l'entrée parallèle du circuit de multiplication, et de H, codée sur n bits, à l'entrée série de ce même circuit de multiplication, pour obtenir une donnée $P(C, H)_{N'} = C * 2^{-a}$, mod N',
E4 - production de $2^a * P(C, H)_{N'} = C$ mod N.

Ce procédé permet de réaliser des réductions modulaires avec un modulo pair et C une donnée de taille quelconque.

L'invention propose également, pour produire C mod N, lorsque N' = N, de réaliser les étapes suivantes :

E1 - production d'une donnée binaire $H = 2^{m'*k}$ mod N,
E3 - fourniture de C, codée sur $m' * k$ bits, à l'entrée série du circuit de multiplication, et de H, codée sur n bits, à l'entrée parallèle de ce même circuit de multiplication, pour obtenir $P(C, H)_N = C$ mod N.

Ce procédé permet de mettre en oeuvre une réduction modulaire pour un modulo impair, C étant de taille quelconque.

L'invention sera mieux comprise, et d'autres particularités et avantages apparaîtront dans la description ci-après de modes de réalisation de l'invention, donnés à titre indicatif et nullement limitatif, lue conjointement aux dessins annexés, dans lesquels :

- la figure 1 représente schématiquement un circuit permettant de mettre en oeuvre des opérations modulaires selon la méthode de Montgomery,
- la figure 2 représente un circuit mis en oeuvre dans le calcul d'un paramètre de correction d'erreur selon l'invention.

La figure 1 représente un circuit logique 1 de traîtement modulaire.

En pratique, ce circuit 1 est associé à une unité centrale (non illustrée) qui permet de commander son fonctionnement par le biais d'un circuit de séquencement (non illustré).

Il comprend :

- trois registres à décalage 10, 11 et 12 à entrée et sortie série. Ces registres comportent chacun un même nombre n de cellules, avec n = m * k. Ces registres pourront être subdivisables, par exemple en registres de n/2 cellules, et en registres de k bits pour les registres 10 et 12.
- des multiplexeurs 13, 14 et 15 sont placés respectivement devant les registres 10, 11 et 12. On placera également des multiplexeurs devant les subdivisions si celles ci existent.
- trois registres 16, 17 et 18 comportant chacun k cellules. Les registres 16 et 17 et 18 sont des registres à sortie parallèle et entrée série.
- deux circuits de multiplication 19 et 20 comprenant chacun une entrée série, une entrée parallèle et une sortie série. L'entrée parallèle du circuit de multiplication 19 est reliée à la sortie du registre 16 par le biais d'une bascule de mémorisation 21 de k cellules. L'entrée parallèle du circuit de multiplication 20 est reliée à l'une des sorties des registres 17 ou 18, par le biais d'une bascule de mémorisation 22 de k cellules. Cette bascule 22 est elle-même reliée à l'une des sorties des registres 17 et 18, par le biais d'un multiplexeur à deux entrées parallèles et une sortie parallèle.

- des multiplexeurs 24, 25, 25', 26, 36 et 38.
- un démultiplexeur 39.
- des circuits de soustraction série 27, 28 et 29.
- des circuits d'addition série 30 et 31.
- des circuits de retardement 32, 33 et 34 pour retarder de k temps de cycle la propagation de données binaires.
- un circuit 35 de stockage de résultat de comparaison.

Pour plus de détails, on pourra se reporter à la demande de brevet européen citée (EP - 0 601 907 A2), et en particulier à la figure 3 de cette demande, et aux extraits de la description s'y rapportant : page 15, ligne 54 à page 16, ligne 13, et page 17, ligne 50 à page 18, ligne 55.

Le circuit de la figure 1 permet de mettre en oeuvre l'invention.

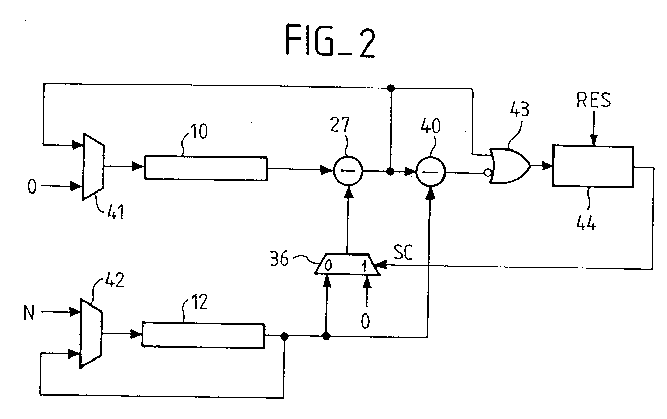

La figure 2 représente un circuit comprenant :

- les deux registres à décalage 10 et 12, le circuit de soustraction 27, le multiplexeur 36,
- deux multiplexeurs à deux entrées 41 et 42, dont les sorties respectives sont reliées respectivement aux entrées des registres 10 et 12,
- un circuit de soustraction série 40,
- une porte NON ET 43 à deux entrées,
- un circuit 44 de stockage de résultat de comparaison.

Les circuits de soustraction 27 et 40 ont deux entrées série et une sortie série.

Le circuit de soustraction 27 a une première entrée reliée à la sortie du registre 10, et sa sortie est reliée à une première entrée du circuit de soustraction 40. Le circuit de soustraction 40 a sa deuxième entrée reliée à la sortie du registre 12, et sa sortie reliée à une entrée inverseuse de la porte 43.

L'autre entrée (non inverseuse) de la porte 43 est reliée à la sortie du circuit de soustraction 27. Sa sortie est reliée à une entrée du circuit 44. Ce circuit 44 a une autre entrée pour recevoir un signal de réinitialisation RES.

Le multiplexeur 36 a deux entrées et une sortie. Sa sortie est reliée à la deuxième entrée du circuit de soustraction 28. Ses entrées sont reliées respectivement à la sortie du registre 12 et à une masse (potentiel correspondant à un 0 logique). Le multiplexeur 36 relie sélectivement sa sortie à sa première ou sa deuxième entrée suivant l'état d'un signal de sélection SC reçu du circuit 44 (par exemple, à la première entrée si SC = 0, et à la deuxième entrée si SC = 1).

Le multiplexeur 41 a ses entrées reliées respectivement à la sortie du circuit de soustraction 27 et à la masse.

Le multiplexeur 42 a ses entrées reliées respectivement à la sortie du registre 12 et à une borne d'entrée pour recevoir en série une donnée binaire (en pratique, le modulo N).

Le circuit de la figure 2 est utilisé pour produire un paramètre de correction d'erreur H qui est une donnée binaire.

On souhaite effectuer une opération de réduction modulaire, notée C mod N, c'est à dire produire une donnée binaire à partir de la manipulation de deux autres données binaires.

Plusieurs procédés sont envisageables.

On supposera dans un premier temps qu'on a :

- C et N des données codées en binaire,
- $N = N' * 2^a$, avec

  - N paire (bit de poids le plus faible à zéro),
  - N', donnée codée en binaire, impaire (bit de poids le plus faible égal à un), et
  - a un entier supérieur ou égal à 1,

- N codé sur l bits utiles, l entier non nul avec $u * k \geq l > (u - 1) * k$, et u entier non nul tel que $u \leq m$. N' est donc codé sur l - a bits utiles.
- C codé sur c bits utiles et m' mots, avec :

  - c entier quelconque,
  - m' entier tel que $m' * k \geq c > (m' - 1) * k$,
  - m" entier tel que $m" * m \geq m' > (m" - 1) * m$,
  - v entier non nul tel que $v * u \geq m' > (v - 1) * u$,
  - w entier tel que $w * l \geq c > (w - 1) * l$.

Par taille utile, ou nombre de bits utiles, d'une donnée binaire, on entendra le nombre minimum de bits nécessaire et suffisant pour représenter une donnée, c'est à dire le nombre minimum de bits tel que le bit de poids le plus fort soit égal à un.

Classiquement, on déterminera a, l, u, v, c, m', m'', et w à l'aide l'unité centrale associée au coprocesseur, et qui lui fournit les données binaires à traiter.

**I - division de C en données de n bits.**

Un premier procédé consiste à considérer que C est codée sur un nombre entier de bits qui soit un multiple de n, et que N' est codée sur n bits.

**I.1 - Méthode.**

Si m' > m (c'est à dire m'' > 1), on peut écrire :

$C = \Sigma_i \, C_i * 2^{i*n}$ avec i indice variant de 0 à m'' - 1, et $C_i$ donnée binaire codée sur n bits.

On notera que $C_{m''-1}$ a ses (m'' * n - c) bits de poids les plus forts à zéro.

On déduit de la définition de C ci-dessus que :

$$C \bmod N = (\Sigma_i \, C_i * 2^{i*n}) \bmod N$$

$$= (\Sigma_i \, (C_i * 2^{i*n} \bmod N)) \bmod N$$

$$= [(\Sigma_i \, (C_i * 2^{i*n-a} \bmod N')) \bmod N'] * 2^a$$

Il suffit de procéder selon les étapes suivantes :

E0 - production de $J_0(N')$, donnée codée en binaire sur k bits,
E1 - pour i variant de 1 à m'' - 1, effectuer les opérations suivantes :

-   production d'une donnée binaire $H_i = 2^{(i+1)*n-a} \bmod N' = 2^{f(C, N)} \bmod N'$, avec f(C, N) = (i + 1) * n - a,
-   fourniture de $H_i$, codée sur n bits, à l'entrée série du circuit de multiplication 19, et de $C_i$, codée sur n bits, à l'entrée parallèle de ce même circuit de multiplication, pour obtenir :

$$P(C_i, H_i)_{N'} = C_i * 2^{i*n-a} \bmod N',$$

-   décalage du résultat à gauche de a bits pour obtenir $C_i * 2^{i*n} \bmod N$ et stockage de ce résultat,

E2 - pour i = 0, stockage de $C_0$ si $C_0 < N$, ou de $C_0 - N$ si $C_0 \geq N$,
E3 - faire une addition modulaire des $C_i$ stockés et de $C_0$ ou $C_0 - N$ pour obtenir C mod N.

Typiquement, les étapes E0, E2 et E3 seront réalisées par l'unité centrale (méthode logicielle). L'étape E1 utilisera les circuits illustrés figures 1 et 2 pour calculer $H_i$ et $C_i * 2^{i*n-a} \bmod N'$.

Le décalage à gauche de $P(C_i, H_i)_{N'}$, qui revient à produire $2^a * P(C_i, H_i)_{N'}$ pourra être réalisé soit réellement, dans un registre, soit fictivement par l'unité centrale.

On pourrait utiliser un circuit cablé spécifiquement développé pour réaliser les étapes E2 et E3. Néanmoins, cela augmenterait la surface de l'ensemble unité centrale - coprocesseur.

Bien entendu, si $c \leq n$, seule l'étape E2 sera mise en oeuvre.

**I.2 - Production des $C_i * 2^{i*n-a} \bmod N'$, avec i variant de 1 à m'' - 1.**

Pour produire les $C_i * 2^{i*n-a} \bmod N'$, on procèdera selon les étapes suivantes :
Pour i variant de 1 à m'' -1 :

R1 - chargement du paramètre $H_i$ dans le registre 10 et du modulo N' dans le registre 12, et initialisation du registre 11 de n bits à zéro, le contenu de ce registre 11 étant noté S, avec S donnée variable binaire codée sur n bits,
R2 - mise en oeuvre d'une boucle, indicée par s, avec s variant de 1 à m, chaque $s^{ième}$ itération comprenant les opérations suivantes :

a) transfert du $s^{ième}$ mot $C_{i,s-1}$ de la donnée $C_i$ du registre 16 vers la bascule de mémorisation 21,
b) production d'une valeur $X(s) = S(s-1) + H_i * C_{i,s-1}$ avec $S(0) = 0$ (n bits à zéro) et $S(s-1)$ la valeur dite actualisée de S, définie ci-après, en :

I - décalant à droite le contenu du registre 10 vers l'entrée du circuit de multiplication 19 série-parallèle, avec rebouclage de la sortie du registre 10 sur son entrée,
II - multipliant les bits de $H_i$ par $C_{i,s-1}$,
III - décalant à droite le contenu du registre 12, avec rebouclage de la sortie de ce registre sur son entrée,
IV - déterminant la valeur actualisée de $S(s-1)$ comme étant la valeur stockée dans le registre 11 après la $(s-1)^{ième}$ itération, si celle ci est inférieure à N', et si elle est plus grande, en soustrayant en série N' de celle-ci dans le circuit de soustraction 28, la valeur en résultant étant la valeur actualisée de $S(s-1)$, et
V - décalant à droite le contenu du registre 11 et en additionnant bit à bit la valeur de la multiplication $H_i * C_{i,s-1}$ avec la valeur actualisée de $S(s-1)$ dans le circuit d'addition 30,

c) multiplication, dans le circuit de multiplication 20, du mot le moins significatif de $X(s)$, $X_0(s)$, par $J_0$, et entrée de la valeur $X_0(s) * J_0 \bmod 2^k = Y_0(s)$ dans le registre 18, et simultanément retarder N' et $X(s)$ de k cycles dans les circuits de retardement 32 et 34,
d) calcul d'une valeur $Z(s) = X(s) + Y_0(s) * N'$ en:

I - multipliant $Y_0(s)$ par N', retardé de k cycles, dans le circuit de multiplication 20, et
II - additionnant $X(s)$ à la valeur $Y_0(s) * N'$ bit à bit dans le circuit d'addition 31,

e) ne pas prendre en compte le mot le moins significatif de $Z(s)$ et stocker les mots restants, c'est à dire $Z(s)/2^k$, dans le registre 11,
f) comparer $Z(s)/2^k$ à N', bit à bit, dans le but de déterminer la valeur actualisée $S(s)$ de l'itération suivante, de la manière décrite ci-dessus, cette comparaison se faisant en soustrayant bit à bit $Z(s)/2^k$ et N' dans le circuit de soustraction 29, N' ayant été retardé de k cycles supplémentaires dans le circuit de retardement 33,
g) le $s^{ième}$ mot de $C_i$ étant chargé dans le registre 16 à un instant quelconque pendant les opérations ci-dessus;

R3 - à la $m^{ième}$ itération, ignorer le mot le moins significatif de $Z(m)$ et entrer les mots restants, c'est à dire $Z(m)/2^k$, dans le registre 10,
R4 - sortie du résultat stocké dans le registre 10 à la dernière itération, éventuellement soustrait de N' si nécessaire, par le biais du circuit de soustraction 27.

### I.3 - Production de $H_i$, pour i variant de 1 à m" - 1.

Pour produire $H_i = 2^{(i+1)*n-a} \bmod N'$, on pourra reprendre le procédé déjà existant (c'est à dire à base de soustractions uniquement) en réalisant $(i + 1) * n - l + 1$ soustractions successives.
On opérera alors de la manière suivante :

H1 - chargement de N' dans le registre 12, et initialisation du registre 10 à $B(0) = 0$ (n bits à 0),
H2 - sortie de N' du registre 12 par décalage à droite, avec rebouclage sur son entrée, de $l - a$ bits, afin d'avoir un bit de poids le plus fort à 1 dans le registre 12,
H3 - production et stockage d'une donnée $B(1) = 2 * (B(0) - N")$, codée sur n bits, avec $N" = N' * 2^{n-l+a}$, N" correspondant à la donnée binaire stockée dans le registre 12 par :

- sortie de N" et B(0) par décalage à droite dans les registres 10 et 12 du contenu de ces registres, l'entrée du registre 10 étant reliée à la sortie du circuit de soustraction 27, et l'entrée du registre 12 étant reliée à sa sortie,
- soustraction bit à bit, dans le circuit de soustraction 27, au fur et à mesure de leur sortie, des bits de N" et B(0), avec décalage à gauche d'une unité du résultat noté $R(0) = B(0) - N"$, le décalage se faisant dans le soustracteur en sortant un premier bit à 0,
- chargement du résultat de la soustraction après décalage, noté $B(1) = 2 * R(0)$, dans le registre 10,
- soustraction bit à bit, dans le circuit de soustraction 40, de B(1) et N", pour déterminer si B(1) est $\geq$ ou $<$ à N", et production par le circuit 44 de $SC = 0$ si $B(1) \geq N"$, et de $Sc = 1$ si $B(1) < N"$,

H4 - mise en oeuvre d'une boucle indicée par un indice s, avec s variant de 1 à $(i + 1) * n - l$, chaque itération comprenant les opérations suivantes :

- si $B(s) < N''$ alors chargement dans le registre 10 de $B(s+1) = 2 * (B(s) - 0) = 2 * B(s)$, après décalage à gauche de une unité, et comparaison de bit à bit de $B(s+1)$ et de $N''$,
- sinon soustraction bit à bit de $N''$ et $B(s)$, avec décalage à gauche du résultat de une unité, et chargement dans le registre 10 de $B(s+1) = 2 * (B(s) - N'')$, et comparaison bit à bit de $B(s+1)$ et de $N''$,

H5 - si $B((1+1)*n-l+1) \geq N''$ : soustraction bit à bit de $B((1+1)*n-1+1)$ et $N''$ et chargement du résultat dans le registre 10 avec décalage à droite de une unité du résultat.

On a $2^{n+(i+1)*n-l} \mod N''$ dans le registre 10.

H6 - décalage à droite de $n - l + a$ bits dans les registres 10 et 12. Ces registres contiennent alors respectivement $2^{n+i*n-a} \mod N'$ et $N'$.

## I.4 - Calcul de H modifié.

On voit que plus $m''$ est grand, plus le nombre de soustraction est important. C'est pénalisant du point de vue du temps de calcul, chaque soustraction nécessitant n temps de cycle pour décaler les n bits stockés dans les registres 10 et 12.

Une variante est envisageable, consistant à n'effectuer les soustractions que pour le paramètre de correction d'erreur $H_1$ associé à $i = 1$, puis à obtenir les paramètres de correction d'erreur $H_i$ associés aux indices supérieurs par mise en oeuvre d'opérations $P_{field}$.

On procèdera de la manière suivante :

- production de $H_1 = 2^{2*n-a} \mod N'$ ($2 * n - l + 1$ soustractions),
- pour $i > 1$ :

  - calcul de $p(i) = \text{Ent}[\log_2(i*n/(n-a))] + 1$, dans l'unité centrale (méthode logicielle), Ent désignant l'opérateur "partie entière".
  - mise en oeuvre de $p(i)$ opérations $P_{field}$ à l'aide du circuit de la figure 1 (on pourra se reporter à la description page 19, ligne 50 à page 20, ligne 45 de la demande de brevet européen citée) :

    $H_{i,t} = P(H_{i,t-1}, H_{i,t-1})_{N'} = 2^{n+2\exp(t)*(n-a)} \mod N' \ N'$
    avec t indice variant de 1 à $p(i)$ et $H_{i,0} = H_1$.
    on obtient :

    $H_{i,p(i)} = 2^{n+2\exp(p(i))*(n-a)} \mod N'$, exp désignant la fonction exponientiation,

    - calcul de $r = 2^{p(i)} * (n - a) - i * n + a$ dans l'unité centrale (méthode logicielle),

    Si $r > n$, stockage de $H_{i,p(i)}$, puis calcul de $2^{n-r} \mod N'$ par combinaison adéquate d'opérations $P_{field}$.

Le calcul de $2^{n-r} \mod N'$ s'effectuera de la manière suivante :

- choix adéquat de données binaires $D_i = 2^{-x(i)*n+y(i)*a} \mod N'$, associées à des couples d'entiers $(x(i), y(i))$,
- mise en oeuvre d'opérations $P(Di, D_j)_{N'} = 2^{-(x(i)+x(j)+1)*n+(y(i)+y(j))*a} \mod N'$ pour l'obtention de $2^{n-r} \mod N' = 2^{-x*n+y*a} \mod N'$.
- fourniture de la donnée $H_{i,p(i)}$ si $n - r \geq 0$ (ou de $2^{n-r} \mod N'$ si $n - r < 0$), codée sur n bits, à l'entrée série du circuit de multiplication 19, et parallèlement fourniture de $2^{n-r}$ (ou de $H_{i,p(i)}$ si $n - r < 0$) codée sur n bits, à l'entrée parallèle de ce même circuit de multiplication, pour obtenir $H_i$.

On a $H_i = 2^{(i+1)*n-a} \mod N'$.

## II - division de M en données de 1 bits.

Un autre procédé consiste à considérer que C est codé sur un nombre entier de bits qui soit un multiple de 1.

## II.1 - Méthode.

Si $w > 1$, on peut écrire $C = \Sigma_i\, C_i * 2^{i*l}$ avec i variant de 0 à w - 1.
On en déduit :

$$C \bmod N = (\Sigma_i\, C_i * 2^{i*l}) \bmod N$$

$$= (\Sigma_i\, (C_i * 2^{i*l} \bmod N)) \bmod N$$

$$= [(\Sigma_i\, (C_i * 2^{i*l-a} \bmod N')) \bmod N'] * 2^a$$

Il suffit de procéder selon les étapes suivantes :

E0 - production de $J_0(N')$, donnée codée en binaire sur k bits,
1 - pour i variant de 1 à w - 1, effectuer les opérations suivantes :

- production de $H_i = 2^{n+i*l-a} \bmod N' = 2^{f(C, N)} \bmod N'$, avec $f(C, N) = n + i * l - a$,
- fourniture de $C_i$, codée sur n bits, à l'entrée parallèle du circuit de multiplication 19, et de $H_i$, codée sur n bits, à l'entrée série de ce même circuit de multiplication, pour obtenir $C_i * 2^{i*l-a} \bmod N'$,
- décaler le résultat à gauche de a bits pour obtenir $C_i * 2^{i*l} \bmod N$ et stocker ce résultat,

E2 - pour i = 0, stockage de $C_0$ si $C_0 < N$, et de $C_0 - N$ si $C_0 \geq N$,
E3 - faire une addition modulaire des $C_i$ stockés, et de $C_0$ ou $C_0 - N$, pour obtenir C mod N.

Pour les mises en oeuvre des calculs de $H_i$ et $C_i * 2^{i*l-a} \bmod N'$, on procèdera de manière analogue au procédé précédent.

## II.2 - Production des $C_i * 2^{i*l-a}$ mod N', avec i variant de 1 à w - 1.

Pour calculer les $C_i * 2^{i*l-a} \bmod N'$, on procèdera selon les étapes suivantes :
Pour i variant de 1 à w - 1 :

R1 - chargement du paramètre $H_i = 2^{n+i*l-a} \bmod N'$dans le registre 10 et du modulo N' dans le registre 12, et initialisation du registre 11 de n bits à zéro, le contenu de ce registre 11 étant noté S, avec S donnée variable binaire codée sur n bits,
R2 - mise en oeuvre d'une boucle, indicée par s, avec s variant de 1 à m, chaque $s^{\text{ième}}$ itération comprenant les opérations suivantes :

a) transfert du $s^{\text{ième}}$ mot $C_{i,s-1}$ de la donnée $C_i$ du registre 16 vers la bascule de mémorisation 21,
b) production d'une valeur $X(s) = S(s-1) + H_i * C_{i,s-1}$ avec $S(0) = 0$ (n bits à zéro) et S(s-1) la valeur dite actualisée de S, définie ci-après, en :

I - décalant à droite le contenu du registre 10 vers l'entrée du circuit de multiplication 19 série-parallèle, avec rebouclage de la sortie du registre 10 sur son entrée,
II - multipliant les bits de $H_i$ par $C_{i,s-1}$,
III - décalant à droite le contenu du registre 12, avec rebouclage de la sortie de ce registre sur son entrée,
IV - déterminant la valeur actualisée de S(s-1) comme étant la valeur stockée dans le registre 11 après la $(s-1)^{\text{ième}}$ itération, si celle ci est inférieure à N', et si elle est plus grande, en soustrayant en série N' de celle-ci dans le circuit de soustraction 28, la valeur en résultant étant la valeur actualisée de S(s-1), et
V - décalant à droite le contenu du registre 11 et en additionnant bit à bit la valeur de la multiplication $H_i * C_{i,s-1}$ avec la valeur actualisée de S(s-1) dans le circuit d'addition 30,

c) multiplication, dans le circuit de multiplication 20, du mot le moins significatif de X(s), $X_0(s)$, par $J_0$, et entrée de la valeur $X_0(s) * J_0 \bmod 2^k = Y_0(s)$ dans le registre 18, et simultanément retarder N' et X(s) de k cycles dans les circuits de retardement 32 et 34,
d) calcul d'une valeur $Z(s) = X(s) + Y_0(s) * N'$ en:

I - multipliant $Y_0$ (s) par N', retardé de k cycles, dans le circuit de multiplication 20, et

II - additionnant X(s) à la valeur $Y_0(s) * N'$ bit à bit dans le circuit d'addition 31,

e) ne pas prendre en compte le mot le moins significatif de Z(s) et stocker les mots restants, c'est à dire Z(s) /$2^k$, dans le registre 11,

f) comparer $Z(s)/2^k$ à N', bit à bit, dans le but de déterminer la valeur actualisée S(s) de l'itération suivante, de la manière décrite ci-dessus, cette comparaison se faisant en soustrayant bit à bit $Z(s)/2^k$ et N' dans le circuit de soustraction 29, N' ayant été retardé de k cycles supplémentaires dans le circuit de retardement 33,

g) le $s^{ième}$ mot de $C_i$ étant chargé dans le registre 16 à un instant quelconque pendant les opérations ci-dessus;

R3 - à la $m^{ième}$ itération, ignorer le mot le moins significatif de Z(m) et entrer les mots restants, c'est à dire Z(m)/ $2^k$, dans le registre 10,

R4 - sortie du résultat stocké dans le registre 10 à la dernière itération, éventuellement soustrait de N' si nécessaire, par le biais du circuit de soustraction 27.

**II.3 - Production de $H_i$, pour i variant de 1 à w-1.**

Pour produire $H_i = 2^{n+i*l-a}$ mod N', on pourra reprendre le procédé déjà existant (c'est à dire à base de soustractions uniquement) en réalisant i * l + n - l + 1 soustractions successives.

On opérera alors de la manière suivante :

H1 - chargement de N' dans le registre 12, et initialisation du registre 10 à B(0) = 0 (n bits à 0),

H2 - sortie de N' du registre 12 par décalage à droite, avec rebouclage sur son entrée, de l - a bits, afin d'avoir un bit de poids le plus fort à 1 dans le registre 12,

H3 - production et stockage d'une donnée B(1) = 2 * (B(0) - N"), codée sur n bits, avec N" = N' * $2^{n-l+a}$, N" correspondant à la donnée binaire stockée dans le registre 12 par :

- sortie de N" et B(0) par décalage à droite dans les registres 10 et 12 du contenu de ces registres, l'entrée du registre 10 étant reliée à la sortie du circuit de soustraction 27, et l'entrée du registre 12 étant reliée à sa sortie,
- soustraction bit à bit, dans le circuit de soustraction 27, au fur et à mesure de leur sortie, des bits de N" et B (0), avec décalage à gauche de une unité du résultat noté R(0) = B(0) - N", le décalage se faisant dans le soustracteur en sortant un premier bit à 0,
- chargement du résultat de la soustraction après décalage, noté B(1) = 2 * R(0), dans le registre 10,
- soustraction bit à bit, dans le circuit de soustraction 40, de B(1) et N", pour déterminer si B(1) est ≥ ou < à N", et production par le circuit 44 de SC = 0 si B(1) ≥ N", et de Sc = 1 si B(1) < N",

H4 - mise en oeuvre d'une boucle indicée par un indice s, avec s variant de 1 à n + i * l - l, chaque itération comprenant les opérations suivantes :

- si B(s) < N" alors chargement dans le registre 10 de B(s+1) = 2 * (B(s) - 0) = 2 * B(s), après décalage à gauche de une unité, et comparaison de bit à bit de B(s+1) et de N",
- sinon soustraction bit à bit de N" et B(s), avec décalage à gauche du résultat de une unité, et chargement dans le registre 10 de B(s+1) = 2 * (B(s) - N"), et comparaison bit à bit de B(s+1) et de N",

H5 - si B(n+i*l-l+1) ≥ N" : soustraction bit à bit de B(n+i*l-l+1) et N" et chargement du résultat dans le registre 10 avec décalage à droite de une unité du résultat.

On a $2^{2*n+i*l-l}$ mod N" dans le registre 10.

H6 - décalage à droite de n - l + a bits dans les registres 10 et 12. Ces registres contiennent alors respectivement $2^{n+i*l-a}$ mod N' et N'.

**II.4 - Production de H modifiée.**

Une variante est enviseageable, analogue à celle décrite précédemment :

- production de $H_1 = 2^{n+l-a}$ mod N' (n + 1 soustractions),
- pour i > 1 :

- calcul de $p(i) = Ent[\log_2(i*l/(l-a))] + 1$
- mise en oeuvre de $p(i)$ opérations $P_{field}$ à l'aide du circuit de la figure 1 :

$H_{i,t} = P(H_{i,t-1}, H_{i,t-1})_{N'} = 2^{n+2exp(t)*(l-a)} \bmod N'$
avec t indice variant de 1 à $p(i)$ et $H_{i,0} = H_1$.
on obtient :
$H_{i,p(i)} = 2^{n+2exp(p(i))*(l-a)} \bmod N'$, exp désignant la fonction exponientiation,

- calcul de $r = 2^{p(i)} * (l - a) - i * l + a$ dans l'unité centrale (méthode logicielle),

Si $r > m$, stockage de $H_{i,p(i)}$, puis calcul de $2^{n-r} \bmod N'$ par combinaisons adéquates de $P_{field}$ multiplications.

Le calcul de $2^{n-r} \bmod N'$ s'effectuera de la manière suivante :

- choix adéquat des $D_i = 2^{-x(i)*n+y(i)*a} \bmod N'$, associés aux couples d'entiers $(x(i), y(i))$,
- séquence des calculs des $P(D_i, D_j)N' = 2^{-(x(i)+x(j)+1)*n+(y(i)+y(j))*a} \bmod N'$ pour l'obtention de $2^{n-r} \bmod N' = 2^{-x*n+y*a} \bmod N'$,
- fourniture de $H_{i,p(i)}$ si $n-r \geq 0$ (ou de $2^{n-r} \bmod N'$ si $n-r < 0$), codée sur n bits, à l'entrée série du circuit de multiplication 19, et parallèlement fourniture de $2^{n-r}$ (ou de $H_{i,p(i)}$ si $n-r < 0$) codée sur n bits, à l'entrée parallèle de ce même circuit de multiplication, pour obtenir $H_i$.

On a $H_i = 2^{n+i*l-a} \bmod N'$.

**III - fourniture successive des mots de C au circuit de multiplication.**

On considère que :

- N est codée sur $u * k$ bits, avec $u * k - l$ bits de poids les plus forts à zéro, et
- C est codée sur $m' * k$ bits avec $m' * k - c$ bits de poids les plus forts à zéro.

En effet, u mots de k bits sont suffisants pour déterminer N de façon certaine. De même, m' mots de k bits sont suffisant pour déterminer C de façon certaine.
L'inventeur propose deux types de modification :

- utiliser m' fois le registre 16, c'est-à-dire ne réaliser qu'une seule opération $P_{field}$ en fournissant successivement tous les mots de C,
- calculer le paramètre de correction d'erreur H associé à cette opération.

**III .1 - Méthode.**

Il suffit de procéder selon les étapes suivantes :

E0 production de $J_0(N')$, à l'aide de l'unité centrale,
E1 - production de $H = 2^{m'*k-a} \bmod N' = 2^{f(C, N)} \bmod N'$, avec $f(C, N) = m' * k - a$, en utilisant le coprocesseur,
E3 fourniture de C, codée sur $m' * k$ bits, à l'entrée série du circuit de multiplication 19, et de H, codée sur n bits, à l'entrée parallèle de ce même circuit de multiplication, pour obtenir $P(C, H)_{N'} = C * 2^{-a}$, mod N',
E4 - décalage du résultat à gauche de a bits pour obtenir $2^a * P(C, H)_{N'} = C \bmod N$ (cette étape pourra être réalisée dans l'unité centrale).

En pratique, la taille utile de H est inférieure ou égale à la taille utile de N', c'est à dire inférieure ou égale à la taille de N, et donc inférieure ou égale à n.

**III . 2 - Production de $C * 2^{-a} \bmod N'$.**

On procédera de la manière suivante :

R1 - chargement du paramètre H dans le registre 10 et du modulo N' dans le registre 12, et initialisation du registre 11 de n bits à zéro, le contenu de ce registre 11 étant noté S, avec S donnée variable binaire codée sur n bits,

R2 - mise en oeuvre d'une boucle, indicée par s, avec s variant de 1 à m', chaque s$^{ième}$ itération comprenant les opérations suivantes :

a) transfert du s$^{ième}$ mot $C_{s-1}$ de C du registre 16 vers la bascule de mémorisation 21,

b) production d'une valeur $X(s) = S(s-1) + H * C_{s-1}$ avec $S(0) = 0$ (n bits à zéro) et $S(s-1)$ la valeur dite actualisée de S, définie ci-après, en :

I - décalant à droite le contenu du registre 10 vers l'entrée du circuit de multiplication 19 série-parallèle, avec rebouclage de la sortie du registre 10 sur son entrée,

II - multipliant les bits de H par $C_{s-1}$,

III - décalant à droite le contenu du registre 12, avec rebouclage de la sortie de ce registre sur son entrée,

IV - déterminant la valeur actualisée de $S(s-1)$ comme étant la valeur stockée dans le registre 11 après la $(s-1)^{ième}$ itération, si celle ci est inférieure à N', et si elle est plus grande, en soustrayant en série N' de celle-ci dans le circuit de soustraction 28, la valeur en résultant étant la valeur actualisée de $S(s-1)$, et

V - décalant à droite le contenu du registre 11 et en additionnant bit à bit la valeur de la multiplication H $* C_{s-1}$ avec la valeur actualisée de $S(s-1)$ dans le circuit d'addition 30,

c) multiplication, dans le circuit de multiplication 20, du mot le moins significatif de $X(s)$, $X_0(s)$, par $J_0$, et entrée de la valeur $X_0(s) * J_0 \bmod 2^k = Y_0(s)$ dans le registre 18, et simultanément retarder N' et $X(s)$ de k cycles dans les circuits de retardement 32 et 34,

d) calcul d'une valeur $Z(s) = X(s) + Y_0(s) * N'$ en:

I - multipliant $Y_0(s)$ par N', retardé de k cycles, dans le circuit de multiplication 20, et

II - additionnant $X(s)$ à la valeur $Y_0(s) * N'$ bit à bit dans le circuit d'addition 31,

e) ne pas prendre en compte le mot le moins significatif de $Z(s)$ et stocker les mots restants, c'est à dire $Z(s)/2^k$, dans le registre 11,

f) comparer $Z(s)/2^k$ à N', bit à bit, dans le but de déterminer la valeur actualisée $S(s)$ de l'itération suivante, de la manière décrite ci-dessus, cette comparaison se faisant en soustrayant bit à bit $Z(s)/2^k$ et N' dans le circuit de soustraction 29, N' ayant été retardé de k cycles supplémentaires dans le circuit de retardement 33,

g) le s$^{ième}$ mot de C étant chargé dans le registre 16 à un instant quelconque pendant les opérations ci-dessus;

R3 - à la m'$^{ième}$ itération, ignorer le mot le moins significatif de $Z(m')$ et entrer les mots restants, c'est-à-dire $Z(m')/2^k$, dans le registre 10,

R4 - sortie du résultat stocké dans le registre 10 à la dernière itération, éventuellement soustrait de N' si nécessaire, par le biais du circuit de soustraction 27.

R5 - décalage de a bits à gauche du résultat.

Le procédé décrit ci-dessus permet de diminuer le nombre d'étapes nécessaires à la production de C mod N. On diminue ainsi fortement le temps de calcul.

### III.3 - Production de $H = 2^{m'*k-a} \bmod N'$.

On considère que la taille utile de N' est de u mots de k bits.

Le nombre de bits utiles de N' est $l' = l - a$.

On procède de la manière suivante :

H1 - chargement du modulo N' dans le registre 12, et initialisation du registre 10, le contenu du registre 10 étant noté B(0) ( n bits à 0), et initialisation du registre 44 (c'est à dire production d'un signal RES tel que SC = 0),

H2 - sortie de N' du registre 12 par décalage à droite, avec rebouclage sur son entrée, de l - a bits, avec l - a le nombre de bits utiles du modulo N', afin d'avoir un bit de poids le plus fort à 1 dans le registre 12,

H3 - production et stockage d'une donnée $B(1) = 2 * (B(0) - N'')$, codée sur n bits, avec $N'' = N' * 2^{n-l+a}$, N'' correspondant à la donnée binaire stockée dans le registre 12, par :

- sortie de N'' et B(0) par décalage à droite dans les registres 10 et 12 du contenu de ces registres, l'entrée du registre 10 étant reliée à la sortie du circuit de soustraction 27, et l'entrée du registre 12 étant reliée à sa sortie,

- soustraction bit à bit, dans le circuit de soustraction 27, au fur et à mesure de leur sortie, des bits de N'' et B(0), avec décalage à gauche d'une unité du résultat noté $R(0) = B(0) - N''$,

- chargement du résultat de la soustraction après décalage noté $B(1) = 2 * R(0)$, dans le registre 10,
- soustraction bit à bit, dans le circuit de soustraction 40, de $B(1)$ et $N''$, pour déterminer si $B(1)$ est $\geq$ ou $<$ à $N''$, et production par le circuit 44 de $SC = 0$ si $B(1) \geq N''$, et de $SC = 1$ si $B(1) < N''$,

H4 - production d'une donnée $H_{int} = 2^t \bmod N''$, avec
$t = n - l + a + u * k + (m' - u) * k/2^r$, avec $r$ un entier tel que $k/2^r$ soit entier, par :
mise en oeuvre d'une boucle indicée par un indice $i$, $i$ entier de 1 à $t - n$, chaque $i^{ème}$ itération comprenant les opérations suivantes :

- si $B(i) < N''$ alors chargement dans le registre 10 de $B(i+1) = 2 * (B(i) - 0) = 2 * B(i)$ après décalage à gauche de $B(i)$ de une unité, et comparaison bit à bit de $B(i+1)$ et de $N''$,
- sinon soustraction bit à bit de $N''$ et $B(i)$, avec décalage à gauche de une unité du résultat et chargement dans le deuxième registre de $B(i+1) = 2 * (B(i) - N'')$, et comparaison bit à bit de $B(i+1)$ et de $N''$,

H5 - si $B(t-n+1) \geq N''$ : soustraction bit à bit de $B(t-n+1)$ et $N''$ dans le circuit de soustraction 27, ce qui donne $2 * (B(t-n+1) - N'')$ et chargement dans le registre 10 de $B(t-n+1) - N''$, ce qui nécessite un décalage à droite de une unité,
H6 - décalage à droite de $n - l + a$ bits dans les registre 10 et 12,

On a alors $N'$ dans le registre 12.

H7 - production du paramètre $H$ par la mise en oeuvre de $r$ opérations $P_{field}$ : i
$H_{int}(j) = P(H_{int}(j-1), H_{int}(j-1))_{N'}$, avec $j$ indice de 1 à $r$, et $H_{int}(0) = B(t-n+1) * 2^{l-n-a}$ ou $(B(t-n+1) - N'') * 2^{l-n-a}$.
$H_{int}(0)$ est dans le registre 10 après le décalage de l'étape H6.

On obtient ainsi $H_{int}(r) = 2^{m'*k} \bmod N'$.

H8 - production du paramètre $H$ par la mise en oeuvre d'une opération $P_{field}$ :
$P(H_{int}(r), 2^{u*k-a})_{N'}$ avec $H_{int}(r)$ fournie à l'entrée série du circuit de multiplication 19, et $2^{u*k-a}$ fournie à l'entrée parallèle de ce même circuit de multiplication.

On obtient ainsi $H = 2^{m'*k-a} \bmod N'$.
On a bien sûr considérer que les $r + 1$ opérations $P_{field}$ étaient réalisées dans le même esprit que pour le procédé décrit auparavant. Cela signifie qu'on fournira à l'entrée parallèle du circuit de multiplication 19, pour chaque opération, $u$ mots de $k$ bits.

## IV - Réduction modulaire pour un modulo impair.

On adapte les procédés décrits ci-dessus dans la partie III.
Il suffit de procéder de la manière suivante :

- calculer $J_0(N)$, à l'aide de l'unité centrale,
- calculer $H = 2^{m'*k} \bmod N = 2^{f(C, N)} \bmod N$, avec $f(C, N) = m' * k$, en utilisant le coprocesseur,
- fournir $C$, codée sur $m' * k$ bits, à l'entrée série du circuit de multiplication 19, et $H$, codée sur $n$ bits, à l'entrée parallèle de ce même circuit de multiplication, pour obtenir $P(C, H)_N = C \bmod N$.

En pratique, la taille utile de $H$ est inférieure ou égale à la taille utile de $N$, c'est à dire inférieure ou égale à la taille de $N$, et donc inférieure ou égale à $n$.

## IV.1 - Production de C mod N.

On procèdera de la manière suivante :

R1 - chargement du paramètre $H$ dans le registre 10 et du modulo $N$ dans le registre 12, et initialisation du registre 11 de $n$ bits à zéro, le contenu de ce registre 11 étant noté $S$, avec $S$ donnée variable binaire codée sur $n$ bits,
R2 - mise en oeuvre d'une boucle, indicée par $s$, avec $s$ variant de 1 à $m'$, chaque $s^{ième}$ itération comprenant les opérations suivantes :

a) transfert du $s^{ième}$ mot $C_{s-1}$ de $C$ du registre 16 vers la bascule de mémorisation 21,

b) production d'une valeur X(s) = S(s-1) H * $c_{S-I}$ avec S(0) = 0 (n bits à zéro) et S(s-1) la valeur dite actualisée de S, définie ci-après, en :

> I - décalant à droite le contenu du registre 10 vers l'entrée du circuit de multiplication 19 série-parallèle, avec rebouclage de la sortie du registre 10 sur son entrée,
> II - multipliant les bits de H par $C_{s-1}$,
> III - décalant à droite le contenu du registre 12, avec rebouclage de la sortie de ce registre sur son entrée,
> IV - déterminant la valeur actualisée de S(s-1) comme étant la valeur stockée dans le registre 11 après la (s-1)$^{\text{ième}}$ itération, si celle ci est inférieure à N, et si elle est plus grande, en soustrayant en série N de celle-ci dans le circuit de soustraction 28, la valeur en résultant étant la valeur actualisée de S(s-1), et
> V - décalant à droite le contenu du registre 11 et en additionnant bit à bit la valeur de la multiplication H * $C_{s-1}$ avec la valeur actualisée de S(s-1) dans le circuit d'addition 30,

c) multiplication, dans le circuit de multiplication 20, du mot le moins significatif de X(s), $X_0(s)$, par $J_0$, et entrée de la valeur $X_0(s) * J_0 \bmod 2^k = Y_0(s)$ dans le registre 18, et simultanément retarder N et X(s) de k cycles dans les circuits de retardement 32 et 34,

d) calcul d'une valeur Z(s) = X(s) + $Y_0(s)$ * N en:

> I - multipliant $Y_0(s)$ par N, retardé de k cycles, dans le circuit de multiplication 20, et
> II - additionnant X(s) à la valeur $Y_0(s)$ * N bit à bit dans le circuit d'addition 31,

e) ne pas prendre en compte le mot le moins significatif de Z(s) et stocker les mots restants, c'est à dire Z(s) /$2^k$, dans le registre 11,

f) comparer Z(s)/$2^k$ à N, bit à bit, dans le but de déterminer la valeur actualisée S(s) de l'itération suivante, de la manière décrite ci-dessus, cette comparaison se faisant en soustrayant bit à bit Z(s)/$2^k$ et N dans le circuit de soustraction 29, N ayant été retardé de k cycles supplémentaires dans le circuit de retardement 33,

g) le s$^{\text{ième}}$ mot de C étant chargé dans le registre 16 à un instant quelconque pendant les opérations ci-dessus,

R3 - à la m'$^{\text{ième}}$ itération, ignorer le mot le moins significatif de Z(m') et entrer les mots restants, c'est à dire Z(m') /$2^k$, dans le registre 10,

R4 - sortie du résultat stocké dans le registre 10 à la dernière itération, éventuellement soustrait de N si nécessaire, par le biais du circuit de soustraction 27.

## IV.2 - Production de H = $2^{m'*k}$ mod N.

On considère que la taille utile de N est de u mots de k bits.

Le nombre de bits utiles de N est 1.

On procède de la manière suivante :

H1 - chargement du modulo N dans le registre 12, et initialisation du registre 10, le contenu du deuxième registre étant noté B(0) ( n bits à 0), et initialisation du registre 44 (c'est à dire production d'un signal RES tel que SC = 0),

H2 - sortie de N du registre 12 par décalage à droite, avec rebouclage sur son entrée, de l bits, avec l le nombre de bits utiles du modulo N, afin d'avoir un bit de poids le plus fort à 1 dans le registre 12,

H3 - production et stockage d'une donnée B(1) = 2 * (B(0) - N'), codée sur n bits, avec N' = N * $2^{n-l}$, N' correspondant à la donnée binaire stockée dans le registre 12, par :

- sortie de N' et B(0) par décalage à droite dans les registres 10 et 12 du contenu de ces registres, l'entrée du registre 10 étant reliée à la sortie du circuit de soustraction 27, et l'entrée du registre 12 étant reliée à sa sortie,
- soustraction bit à bit, dans le circuit de soustraction 27, au fur et à mesure de leur sortie, des bits de N' et B (0), avec décalage à gauche d'une unité du résultat noté R(0) = B(0) - N',
- chargement du résultat de la soustraction après décalage noté B(1) = 2 * R(0), dans le registre 10,
- soustraction bit à bit, dans le circuit de soustraction 40, de B(1) et N', pour déterminer si B(1) est ≥ ou < à N', et production par le circuit 44 de SC = 0 si B(1) ≥ N', et de SC = 1 si B(1) < N',

H4 - production d'une donnée $H_{int} = 2^t$ mod N', avec

> t = n - l + u * k + (m' - u) * k/$2^r$, avec r un entier tel que k/$2^r$ soit entier, par :

> mise en oeuvre d'une boucle indicée par un indice i, i entier de 1 à t - n, chaque i$^{\text{ième}}$ itération comprenant les opérations suivantes :

- si B(i) < N' alors chargement dans le registre 10 de B(i+1) = 2 * (B(i) - 0) = 2 * B(i) après décalage à gauche de B(i) de une unité, et comparaison bit à bit de B(i+1) et de N',
- sinon soustraction bit à bit de N' et B(i), avec décalage à gauche de une unité du résultat et chargement dans le registre 10 de B(i+1) = 2 * (B(i) - N'), et comparaison bit à bit de B(i+1) et de N',

H5 - si B(t-n+1) ≥ N' : soustraction bit à bit de B(t-n+1) et N' dans le circuit de soustraction 27, ce qui donne 2 * (B(t-n+1) - N') et chargement dans le registre 10 de B(t-n+1) - N', ce qui nécessite un décalage à droite de une unité,
H6 - décalage à droite de n - l bits dans les registres 10 et 12,

On a alors N dans le registre 12.

H7 - production du paramètre H par la mise en oeuvre de r opérations $P_{field}$ :
$H_{int}(j) = P(H_{int}(j-1), H_{int}(j-1))_N$ avec j indice de 1 à r, et $H_{int}(0) = B(t-n+1) * 2^{l-n}$ ou $(B(t-n+1) - N'') * 2^{l-n}$ ,
$H_{int}(0) = 2^{t'} \bmod N$, avec $t' = u * k + (m' - u) * k/2^r$.
$H_{int}(0)$ est dans le registre 10 après le décalage de l'étape H6.

On obtient ainsi $H_{int}(r) = H = 2^{m'*k} \bmod N$.
On a bien sûr considérer que les r opérations $P_{field}$ étaient réalisées dans le même esprit que pour le procédé décrit auparavant. Cela signifie qu'on fournira à l'entrée parallèle du circuit de multiplication 19, pour chaque opération, u mots de k bits.
Par rapport au circuit tel qu'il existe dans l'état de la technique, on sera bien sûr obligé de modifier le circuit de séquencement produisant les signaux de commande nécessaires au fonctionnement du circuit illustré figure 1. Ainsi, on devra notamment utiliser, pour le dernier procédé décrit, un compteur programmable pour gérer d'une part l'utilisation du registre 16, car on utilisera un nombre de fois variable ce registre, et d'autre part les décalages dans les registres lors de la production de H en fonction du nombre de bits utiles du modulo N (ou de N' si N est pair).
Dans le circuit tel qu'il existe dans l'état de la technique, on utilise des registres 10, 11 et 12 configurables en registres de 8 ou 16 mots de 32 bits. Si on souhaite diminuer encore le temps de calcul associé à une opération modulaire, on pourra utiliser des registres configurables de 1 à 16 mots de 32 bits, c'est à dire choisir en pratique m = u. Pour se faire, il suffit de rajouter des multiplexeurs supplémentaires dans le circuit de calcul au niveau des registres 10, 11 et 12. Cela permettra, il est vrai au détriment de l'encombrement, de diminuer le temps nécessaire aux décalages dans les registres 10, 11 et 12.
Un avantage de pouvoir réaliser des réductions modulaires avec un modulo pair ou impair trouve une application particulièrement avantageuse pour la mise en oeuvre du cryptage de type RSA.

**Méthode RSA.**

La métode de cryptage RSA nécessite de faire des calculs du type $C = M^D \bmod N$ avec M un message à crypter ou à décrypter, N un modulo tel que N = P * Q, avec P et Q des nombres premiers, et D tel que D * E = 1 mod ((P-1) * (Q - 1)), avec E connu.
Un algorithme pour réaliser ce calcul est le suivant :

$$A = (M \bmod P)^{D \bmod (P - 1)} \bmod P$$

$$B = (M \bmod Q)^{D \bmod (Q - 1)} \bmod Q$$

$$U = Q^{-1} \bmod P$$

Si A < B mod P alors

$$C = (((A + P - (B \bmod P)) * U) \bmod P) * Q + B$$

Sinon

$$C = (((A - (B \bmod P)) * U) \bmod P) * Q + B$$

Cette algorithme met donc notamment en oeuvre :

- 2 réductions modulaires,
- 2 exponentiations modulaires,
- 1 multiplication modulaire.

On pourra mettre en oeuvre l'invention pour calculer :

- D mod (P - 1) et D mod (Q - 1), P - 1 et Q - 1 étant des nombres pairs,
- M mod P et M mod Q, P et Q étant des nombres impairs.

**Recherche de nombres premiers.**

La méthode RSA décrite ci-dessus nécessite de déterminer deux nombres premiers P et Q. Pour éviter une détermination à postériori de ces nombres trop facile, il est souhaitable de choisir des nombres très grands, par exemple codés sur 256 bits.

Une technique connue pour choisir des nombres premiers très grands consiste à choisir un nombre de manière aléatoire et à déterminer le pgcd (plus grand diviseur commun) de ce nombre et du résultat de la multiplication d'un nombre important (par exemple 100) des premiers nombres premiers. Cette technique nécessite de faire des divisions, et le circuit 1 n'est donc pas adapté à sa mise en oeuvre.

L'inventeur propose une autre méthode. Il s'agit non plus de calculer le pgcd du nombre choisi aléatoirement et du produit des 100 (par exemple) premiers nombres premiers, mais d'effectuer successivement la réduction modulaire du nombre aléatoire avec chacun des 100 premiers nombres premiers.

Cette méthode n'est envisageable en pratique que si le temps nécessaire à la mise en oeuvre d'une réduction modulaire est réduit. L'invention permet d'envisager de mettre en oeuvre cette méthode du fait des gains de temps réalisés avec les nouveaux procédés de calcul de correction d'erreur et de réduction modulaire développés dans la partie III ; il est utile ici de configurer les registres à 1 mot de k bits (par exemple k = 32).

Par ailleurs, dans l'art antérieur, on utilise des registres de 256 ou 512 bits seulement. En pratique cela impose, pour réaliser des opérations en un temps raisonnable, de choisir des nombres premiers codés sur un même nombre de bits. Cela pose donc un problème de sécurité vis à vis de tentatives de détermination de ces nombres par des personnes non autorisées.

L'inventeur propose donc de modifier les registres utilisés, par exemple en choisissant des registres modulables pouvant comporter au choix 32, 256, (256 + n), 384, (384 + n), 512, ou (512 + n) cellules, avec n un nombre entier. On prendra par exemple n = 32.

On s'oriente vers des choix de modulo codés sur 512, 768 et 1024 bits.

Le choix de registres modulables tels que définis ci-dessus permet :

- dans le cadre général des opérations modulaires, de minimiser le nombre de décalages dans les registres en s'adaptant de manière plus flexible aux tailles utiles des données traitées,
- dans le cadre plus particulier de la mise en oeuvre du codage RSA, de pouvoir choisir des tailles différentes pour P et Q. Par exemple, si on souhaite avoir un modulo N = P * Q codé sur 512 bits, on pourra par exemple choisir P sur 254 bits et Q sur 258 bits. On utilisera un registre de 256 cellules pour les calculs concernant P, et de 256 + n = 288 cellules pour les calculs concernant Q. Avec le circuit de l'art antérieur, on aurait été obligé d'utiliser un registre de 512 cellules pour les calculs concernant Q, ce qui aurait été préjudiciable pour la durée des calculs.

L'invention est particulièrement avantageuse dans la mesure où on peut la mettre en oeuvre (pour ce qui est des procédés) sans modifier les circuits existants, illustrés figure 1 et 2. On modifie uniquement le circuit de séquencement permettant de produire les différents signaux de commande nécessaires au fonctionnement de ces circuits. En particulier, on est amené à prendre en compte les tailles utiles du modulo N et des opérandes. Avantageusement, on utilisera les procédés de l'invention en modifiant, tel qu'il est indiqué ci-dessus, le circuit 1.

On a supposé dans la figure 2 que l'on utilisait des ressources du circuit de la figure 2. Cela permet de minimiser la taille globale du coprocesseur. Bien entendu, on pourra utiliser un circuit dédié au seul calcul de H.

Bien qu'on ait décrit l'invention en référence à un exemple de réalisation préférée, on comprendra que diverses variantes peuvent être apportées sans sortir du cadre de l'invention telle que revendiquée.

EP 0 712 072 B1

**Revendications**

1. Procédé de mise en oeuvre de réduction modulaire selon la méthode de Montgomery, appliqué à un circuit intégré, dans lequel :

   - une donnée binaire C est codée sur un nombre c de bits, regroupés en m' mots de k bits, avec m' et k entiers, m' étant tel que $m' * k \geq c > (m' - 1) * k$,
   - une donnée binaire N non nulle est codée sur un nombre n de bits,

   caractérisé en ce que pour produire C mod N, on met en oeuvre des étapes de production d'une donnée binaire $J_0(N') = -N'_0{}^{-1} \bmod 2^k$, avec N' une donnée binaire codée sur n bits telle que N' a un bit de poids le plus faible à 1 et $N = N' * 2^a$, avec a entier $\geq 0$, de production d'au moins une donnée binaire H de la forme $2^{f(C, N)}$, avec f(C, N) un entier représentatif de la taille de C et du nombre de bits de poids faible de N qui sont à 0, et de fourniture d'une part de C, à l'entrée parallèle d'un circuit de multiplication (19) ayant une entrée série, une entrée parallèle, et une sortie série, et d'autre part de H à l'entrée série de ce même circuit de multiplication.

2. Procédé selon la revendication 1, caractérisé en ce que pour produire C mod N, le bit de poids le plus faible de N étant égal à 0, on réalise les étapes suivantes:

   E1 - production d'une donnée binaire $H = 2^{m'*k-a} \bmod N'$,
   E3 - fourniture de C, codée sur m' * k bits, à l'entrée parallèle du circuit de multiplication (19), et de H, codée sur n bits, à l'entrée série de ce même circuit de multiplication, pour obtenir une donnée $P(C, H)_{N'} = C * 2^{-a} \bmod N'$,
   E4 - production de $2^a * P(C, H)_{N'} = C \bmod N$.

3. Procédé selon la revendication 2, caractérisé en ce que pour produire $P(C, H)_{N'} = C * 2^{-a} \bmod N'$, on met en oeuvre les étapes suivantes :

   R1 - chargement du paramètre H dans un premier registre (10) et du modulo N' dans un deuxième registre (12), et initialisation d'un troisième registre (11) à zéro, le contenu de ce troisième registre (11) étant noté S, avec S donnée variable binaire codée sur n bits,
   R2 - mise en oeuvre d'une boucle, indicée par s, avec s variant de 1 à m', chaque $s^{ième}$ itération comprenant les opérations suivantes :

   a) transfert du $s^{ième}$ mot $C_{s-1}$ de C d'un quatrième registre (16) vers l'entrée parallèle du circuit de multiplication,
   b) production d'une valeur $X(s) = S(s-1) + H * C_{s-1}$ avec $S(0) = 0$ et S(s-1) la valeur dite actualisée de S, définie ci-après, en :

   I - décalant à droite le contenu du premier registre (10) vers l'entrée série du circuit de multiplication (19), avec rebouclage de la sortie de ce registre sur son entrée,
   II - multipliant les bits de H par $C_{s-1}$,
   III - décalant à droite le contenu du deuxième registre (12), avec rebouclage de la sortie de ce registre sur son entrée,
   IV - déterminant la valeur actualisée de S(s-1) comme étant la valeur stockée dans le troisième registre (11) après la $(s-1)^{ième}$ itération, si celle ci est inférieure à N', et si elle est plus grande, en soustrayant en série N' de celle ci, la valeur en résultant étant la valeur actualisée de S(s-1), et
   V - décalant à droite le contenu du troisième registre (11) et en additionnant bit à bit la valeur de la multiplication $H * C_{s-1}$ avec la valeur actualisée de S(s-1),

   c) multiplication du mot le moins significatif de X(s), $X_0(s)$, par $J_0$, et entrée de la valeur $X_0(S) * J_0 \bmod 2^k = = Y_0(s)$ dans un quatrième registre (18), et simultanément retarder N' et X(s) de k cycles,
   d) calcul d'une valeur $Z(s) = X(s) + Y_0(s) * N'$ en:

   I - multipliant $Y_0(s)$ par N', retardé de k cycles, et
   II - additionnant X(s) à la valeur $Y_0(s) * N'$ bit à bit,

   e) ne pas prendre en compte le mot le moins significatif de Z(s) et stocker les mots restants, c'est à dire

17

$Z(s)/2^k$, dans le troisième registre (11),

f) comparer $Z(s)/2^k$ à N', bit à bit, dans le but de déterminer la valeur actualisée S(s) de l'itération suivante, de la manière décrite ci-dessus, cette comparaison se faisant en soustrayant bit à bit $Z(s)/2^k$ et N', N' ayant été retardé de k cycles supplémentaires,

g) le $s^{ième}$ mot de C étant chargé dans le quatrième registre (16) à un instant quelconque pendant les opérations ci-dessus;

R3 - à la $m'^{ième}$ itération, ignorer le mot le moins significatif de Z(m') et entrer les mots restants, c'est à dire $Z(m')/2^k$, dans le premier registre (10),

R4 - sortie du résultat stocké dans le premier registre (10) à la dernière itération, éventuellement soustrait de N' si nécessaire,

R5 - décalage de a bits à gauche du résultat.

4. Procédé selon l'une des revendications 2 à 3, caractérisé en ce que pour produire H, on met en oeuvre les étapes suivantes :

H1 - chargement du modulo N' dans un premier registre (12), et initialisation d'un deuxième registre (10), le contenu du deuxième registre étant noté B(0),

H2 - sortie de N' du premier registre (12) par décalage à droite, avec rebouclage sur son entrée, de l-a bits, avec l le nombre de bits utiles de N,

H3 - production et stockage d'une donnée $B(1) = 2 * (B(0) - N'')$, codée sur n bits, avec $N'' = N' * 2^{n-l+a}$, par:

- sortie de N'' et B(0) par décalage à droite dans les premier et deuxième registres (10, 12) du contenu de ces registres, l'entrée du premier registre (12) étant reliée à sa sortie,
- soustraction bit à bit des bits de N'' et B(0), avec décalage à gauche de une unité du résultat noté $R(0) = B(0) - N''$,
- chargement du résultat de la soustraction après décalage noté $B(1) = 2 * R(0)$, dans le deuxième registre (10),
- soustraction bit à bit, de B(1) et N'', pour déterminer si B(1) est $\geq$ ou $<$ à N'',

H4 - production d'une donnée $H_{int} = 2^t \bmod N''$, avec

$t = n - 1 + a + u * k + (m' - u) * k/2^r$, avec r un entier tel que $k/2^r$ soit entier, et u un entier non nul tel que $u * k \geq l > (u - 1) * k$, par :

mise en oeuvre d'une boucle indicée par un indice i, i entier de 1 à t - n, chaque $i^{ième}$ itération comprenant les opérations suivantes :

- si $B(i) < N''$ alors chargement dans le deuxième registre (10) de $B(i+1) = 2 * (B(i) - 0) = 2 * B(i)$ après décalage à gauche de B(i) de une unité, et comparaison bit à bit de B(i+1) et de N'',
- sinon soustraction bit à bit de N'' et B(i), avec décalage à gauche de une unité du résultat et chargement dans le deuxième registre de $B(i+1) = 2 * (B(i) - N'')$, et comparaison bit à bit de B(i+1) et de N'',

H5 - si $B(t-n+1) \geq N''$ : soustraction bit à bit de B(t-n+1) et N'', et chargement dans le registre 10 de B(t-n+1) - N'',

H6 - décalage à droite de n - l + a bits dans les premier et deuxième registres (10, 12),

H7 - la mise en oeuvre de r opérations $P_{field}$ :

$H_{int}(j) = P(H_{int}(j-1), H_{int}(j-1))_{N'}$ avec j indice de 1 à r, et $H_{int}(0) = B(t-n+1) * 2^{l-n-a}$ ou $(B(t-n+1) - N'') * 2^{l-n-a}$,

H8 - production du paramètre H par la mise en oeuvre d'une opération $P_{field}$ :

$H = P(H_{int}(r), 2^{u*k-a})_{N'}$.

5. Procédé selon la revendication 1, dans lequel N' = N, caractérisé en ce que pour produire C mod N, on réalise les étapes suivantes :

E1 - production d'une donnée binaire $H = 2^{m'*k} \bmod N$,

E3 - fourniture de C, codée sur m' * k bits, à l'entrée série du circuit de multiplication (19), et de H, codée sur n bits, à l'entrée parallèle de ce même circuit de multiplication, pour obtenir $P(C, H)_N = C \bmod N$.

6. Procédé selon la revendication 5, caractérisé en ce que pour produire $P(C, H)_N = C \bmod N$, on met en oeuvre les étapes suivantes :

R1 - chargement du paramètre H dans un premier registre (10) et du modulo N dans un deuxième registre (12), et initialisation d'un troisième registre (11) à zéro, le contenu de ce troisième registre (11) étant noté S, avec S donnée variable binaire codée sur n bits,

R2 - mise en oeuvre d'une boucle, indicée par s, avec s variant de 1 à m', chaque s$^{ième}$ itération comprenant les opérations suivantes :

a) transfert du s$^{ième}$ mot $C_{s-1}$ de C d'un quatrième registre (16) vers l'entrée parallèle du circuit de multiplication,

b) production d'une valeur $X(s) = S_{(s-1)} + H * C_{s-1}$ avec $S(0) = 0$ et $S(s-1)$ la valeur dite actualisée de S, définie ci-après, en :

I - décalant à droite le contenu du premier registre (10) vers l'entrée série du circuit de multiplication (19), avec rebouclage de la sortie de ce registre sur son entrée,

II - multipliant les bits de H par $C_{s-1}$,

III - décalant à droite le contenu du deuxième registre (12), avec rebouclage de la sortie de ce registre sur son entrée,

IV - déterminant la valeur actualisée de $S(s-1)$ comme étant la valeur stockée dans le troisième registre (11) après la $(s-1)^{ième}$ itération, si celle ci est inférieure à N, et si elle est plus grande, en soustrayant en série N de celle-ci, la valeur en résultant étant la valeur actualisée de $S(s-1)$, et

V - décalant à droite le contenu du troisième registre (11) et en additionnant bit à bit la valeur de la multiplication $H * C_{s-1}$ avec la valeur actualisée de $S(s-1)$,

c) multiplication du mot le moins significatif de X(s), $X_0(s)$, par $J_0$, et entrée de la valeur $X_0(s) * J_0 \bmod 2^k = Y_0(s)$ dans un quatrième registre (18), et simultanément retarder N et X(s) de k cycles,

d) calcul d'une valeur $Z(s) = X(s) + Y_0(s) * N$ en:

I - multipliant $Y_0(s)$ par N, retardé de k cycles, et

II - additionnant X(s) à la valeur $Y_0(s) * N$ bit à bit,

e) ne pas prendre en compte le mot le moins significatif de Z(s) et stocker les mots restants, c'est à dire $Z(s)/2^k$, dans le troisième registre (11),

f) comparer $Z(s)/2^k$ à N, bit à bit, dans le but de déterminer la valeur actualisée S(s) de l'itération suivante, de la manière décrite ci-dessus, cette comparaison se faisant en soustrayant bit à bit $Z(s)/2^k$ et N, N ayant été retardé de k cycles supplémentaires,

g) le s$^{ième}$ mot de C étant chargé dans le quatrième registre (16) à un instant quelconque pendant les opérations ci-dessus;

R3 - à la m'$^{ième}$ itération, ignorer le mot le moins significatif de Z(m') et entrer les mots restants, c'est à dire Z(m')/2$^k$, dans le premier registre (10),

R4 - sortie du résultat stocké dans le premier registre (10) à la dernière itération, éventuellement soustrait de N si nécessaire.

7. Procédé selon l'une des revendications 5 à 6, caractérisé en ce que pour produire H, on met en oeuvre les étapes suivantes :

H1 - chargement du modulo N dans un premier registre (12), et initialisation d'un deuxième registre (10), le contenu du deuxième registre étant noté B(0),

H2 - sortie de N du premier registre (12) par décalage à droite, avec rebouclage sur son entrée, de 1 bits, 1 étant le nombre de bits utiles de N,

H3 - production et stockage d'une donnée $B(1) = 2 * (B(0) - N')$, codée sur n bits, avec $N' = N * 2^{n-l}$, par :

- sortie de N' et B(0) par décalage à droite dans les premier et deuxième registres (10, 12) du contenu de ces registres, l'entrée du premier registre (12) étant reliée à sa sortie,
- soustraction bit à bit des bits de N' et B(0), avec décalage à gauche d'une unité du résultat noté $R(0) = B(0) - N'$,
- chargement du résultat de la soustraction après décalage noté $B(1) = 2 * R(0)$, dans le deuxième registre (10),
- soustraction bit à bit, de B(1) et N', pour déterminer si B(1) est $\geq$ ou $<$ à N',

H4 - production d'une donnée $H_{int} = 2^t \bmod N'$, avec

    $t = n - 1 + u * k + (m' - u) * k/2^r$, avec r un entier tel que $k/2^r$ soit entier, et u un entier non nul tel que $u * k \geq l > (u - 1) * k$, par :

      mise en oeuvre d'une boucle indicée par un indice i, i entier de 1 à t - n, chaque $i^{ème}$ itération comprenant les opérations suivantes :

-    si $B(i) < N'$ alors chargement dans le deuxième registre (10) de $B(i+1) = 2 * (B(i) - 0) = 2 * B(i)$ après décalage à gauche de $B(i)$ de une unité, et comparaison bit à bit de $B(i+1)$ et de $N'$,
-    sinon soustraction bit à bit de $N'$ et $B(i)$, avec décalage à gauche de une unité du résultat et chargement dans le deuxième registre de $B(i+1) = 2 * (B(i) - N')$, et comparaison bit à bit de $B(i+1)$ et de $N'$,

H5 - si $B(t-n+1) \geq N'$ : soustraction bit à bit de $B(t-n+1)$ et $N'$, et chargement dans le registre 10 de $B(t-n+1) - N'$,

H6 - décalage à droite de n - l bits dans les premier et deuxième registres (10, 12),

H7 - production du paramètre H par la mise en oeuvre de r opérations $P_{field}$ :

    $H_{int}(j) = P(H_{int}(j-1), H_{int}(j-1))_N$ avec j indice de 1 à r, et $H_{int}(0) = B(t-n+1) * 2^{l-n}$ ou $(B(t-n+1) - N') * 2^{l-n}$.

**8.** Procédé selon la revendication 1, caractérisé en ce que pour produire C mod N, le bit de poids le plus faible de N étant égal à 0, on réalise les étapes suivantes :

E1 - mise en oeuvre d'une boucle, indicée par i, avec i variant de 1 à m'' - 1, avec m'' un nombre entier tel que $m'' * m \geq m' > (m'' - 1) * m$, m étant tel que $n = m * k$, chaque $i^{ème}$ itération comprenant les opérations suivantes :

-    production d'une donnée binaire $H_i = 2^{(i+1)*n-a} \bmod N'$ codée sur n bits,
-    fourniture de $H_i$ à l'entrée série du circuit de multiplication (19), et fourniture d'une donnée $C_i$ telle que $C = \Sigma_i C_i * 2^{i*n}$ à l'entrée parallèle de ce même circuit de multiplication, pour obtenir $P(C_i, H_i)_{N'} = Ci * 2^{i*n-a} \bmod N'$,
-    décalage du résultat pour obtenir $C_i * 2^{i*n} \bmod N$ et stockage de ce résultat,

E2 - pour i = 0, stockage de $C_0$ si $C_0 < N$, et de $C_0 - N$ si $C_0 \geq N$,

E3 - production du résultat cherché par addition modulaire des $C_i$ stockés et de $C_0$ ou $C_0 - N$.

**9.** Procédé selon la revendication 8, caractérisé en ce que pour produire $H_i = 2^{(i+1)*n-a} \bmod N'$, on met en oeuvre les étapes suivantes :

-    production de $H_i = 2^{2*n-a} \bmod N'$,
-    pour i > 1 :

  -    production de $H_{i,p(i)} = 2^{n+2exp(p(i))*(n-a)} \bmod N'$, avec $p(i) = Ent[\log_2(i*n/(n-a))] + 1$, Ent désignant l'opérateur " partie entière",
  -    si r > n, production de $2^{n-r} \bmod N'$,
  -    fourniture de $H_{i,p(i)}$ si $n - r \geq 0$ (ou de $2^{n-r} \bmod N'$ si n - r < 0), codée sur n bits, à l'entrée série du circuit de multiplication (19), et parallèlement fourniture de $2^{n-r}$ (ou de $H_{i,p(i)}$ si n-r < 0) codée sur n bits, à l'entrée parallèle de ce même circuit de multiplication.

**10.** Procédé selon la revendication 1, caractérisé en ce que pour produire C mod N, le bit de poids le plus faible de N étant égal à 0, on réalise les étapes suivantes :

E1 - mise en oeuvre d'une boucle, indicée par i, avec i variant de 1 à w - 1, avec w entier tel que $w * l \geq c > (w - 1) * l$, l étant le nombre de bits utiles de N, chaque $i^{ème}$ itération comprenant les opérations suivantes :

-    production d'une donnée binaire $H_i = 2^{n+i*l-a} \bmod N'$ codée sur n bits,
-    fourniture de $H_i$ à l'entrée série du circuit de multiplication (19), et fourniture d'une donnée Ci telle que $C = \Sigma_i C_i * 2^{i*l}$ à l'entrée parallèle de ce même circuit de multiplication, pour obtenir $P(C_i, H_i)_{N'} = C_i * 2^{i*l-a} \bmod N'$,
-    décalage du résultat pour obtenir $C_i * 2^{i*l} \bmod N$ et stockage de ce résultat,

E2 - pour i = 0, stockage de $C_0$ si $C_0 < N$, et de $C_0 - N$ si $C_0 \geq N$,

E3 - production du résultat cherché par addition modulaire des Ci stockés et de $C_0$ ou $C_0 - N$.

11. Procédé selon la revendication 10, caractérisé en ce que pour produire $H_i = 2^{n+i*l \cdot a}$ mod N', on met en oeuvre les étapes suivantes :

- production de $H_1 = 2^{n+l \cdot a}$ mod N',
- pour i > 1 :

  - production de $H_{i,p(i)} = 2^{n+2exp(p(i))*(l-a)}$ mod N', avec $p(i) = Ent[log_2(i*l/(l-a))] + 1$, Ent désignant l'opérateur " partie entière",
  - si r > n, production de $2^{n-r}$ mod N',
  - fourniture de $H_{i,p(i)}$ si $n-r \geq 0$ (ou de $2^{n-r}$ mod N' si n - r < 0), codée sur n bits, à l'entrée série du circuit de multiplication (19), et parallèlement fourniture de $2^{n-r}$ (ou de $H_{i,p(i)}$ si n - r < 0), codée sur n bits, à l'entrée parallèle de ce même circuit de multiplication.

**Patentansprüche**

1. Verfahren zum Durchführen einer modularen Reduktion nach dem Montgomery-Verfahren mit einem integrierten Schaltkreis, bei welchem:

   - eine binäre Dateneinheit C codiert ist in c Bits, die aufgeteilt sind auf m' Worte mit k Bits, wobei m' und k ganze Zahlen sind und für m' gilt

   $$m' \cdot k \geq c > (m' - 1) \cdot k ,$$

   - eine binäre Dateneinheit N, die von Null verschieden ist, die codiert ist auf n Bits,

   dadurch gekennzeichnet, daß
   zum Erzeugen von C mod N man die Schritte zum Erzeugen einer binären Dateneinheit $J_0(N') = -N'_0{}^{-1}$ mod $2^k$ durchführt, wobei N' eine binäre Dateneinheit ist, die auf n Bit codiert ist, so daß N' ein Bit mit geringstem Gewicht 1 hat und $N = N' \cdot 2^a$, wobei a eine ganze zahl $\geq 0$ ist, zum Erzeugen wenigstens einer binären Dateneinheit H der Form $2^{f(C,N)}$, wobei f(C, N) eine ganze Zahl ist, die die Größe von C und die Zahl an Bits mit geringem Gewicht von N darstellt, die 0 sind, und zum Ausgeben einerseits von C am parallelen Eingang eines Multiplika-tionsschaltkreises (19) mit einem seriellen Eingang, einem parallelen Eingang une einem seriellen Ausgang, und andereseits von H am seriellen Eingang des gleichen Multiplikationsschaltkreises.

2. Verfahren nach Anspruch 1, dadurch gekennzeichnet, daß man zum Erzeugen von C mod N, wobei das Bit mit dem geringsten Gewicht von N gleich 0 ist, die folgenden Schritte durchführt :

   E1 - Erzeugen einer binären Dateneinheit $H = {}^{m' \cdot k \cdot a}$ mod N',
   E3 - Ausgeben von C, codiert auf m' · k Bits, an den Paralleleingang des Multiplikationsschaltkreises (19) und von H, codiert auf n Bits, an den seriellen Eingang des gleichen Multiplikationsschaltkreises, um eine Dateneinheit $P(C, H)_{N'} = C \cdot 2^{-a}$ mod N' zu erhalten,
   E4 - Erzeugen von $2^a \cdot P(C, H)_{N'} = C$ mod N.

3. Verfahren nach Anspruch 2, dadurch gekennzeichnet, daß man zum Erzeugen von $P(C, H)_{N'} = C \cdot 2^{-a}$ mod N' die folgenden Schritte durchführt:

   R1 - Laden des Parameters H in ein erstes Register (10) und von Modulo N' in ein zweites Register (12) und Initialisieren eines dritten Registers (11) auf Null, wobei der Inhalt dieses dritten Registers (11) mit S bezeichnet wird und S eine variable binäre Dateneinheit ist, die auf n Bits codiert ist,
   R2 - Durchführen einer Schleife, die mit s indiziert ist, wobei s zwischen 1 und m' variiert, wobei jede s-te Iteration die folgenden Operationen beinhaltet:

   a) Übertragen des s-ten Wortes $C_{s-1}$ von C in einem vierten Register (16) zu einem parallelen Eingang des Multiplikationsschaltkreises,
   b) Erzeugen eines Wertes $X(s) = S(s-1) + H \cdot C_{s-1}$, wobei S(0) = 0 und S(s-1) der aktualisiert genannte Wert von S ist, der nachfolgend definiert wird durch:

I - Verschieben nach rechts des Inhalts- des ersten Registers (10) zum seriellen Eingang des Multiplikationsschaltkreises (19) mit Rückschleifen des Ausgangs dieses Registers an seinen Eingang,

II - Multiplizieren der Bits von H mit $C_{s-1}$,

III - Verschieben nach rechts des Inhalts des zweiten Registers (12) mit Rückschleifen des Ausgangs dieses Registers an seinen Eingang,

IV - Bestimmen des aktualisierten Wertes von S(s-1) als der Wert, der in dem dritten Register (11) nach der (s-1)-ten Iteration abgelegt wurde, wenn dieser kleiner als N' ist, und wenn er größer ist, durch serielles Subtrahieren von N' von diesem, wobei der Ergebniswert der aktualisierte Wert von S(s-1) ist, und

V - Verschieben nach rechts des Inhalts des dritten Registers (11) und Bit-für-Bit-Addieren des Multiplikationswertes $H \cdot C_{s-1}$ zu dem aktualisierten Wert von S(s-1),

c) Multiplizieren des Wortes mit dem geringsten Gewicht von X(s), $X_0(s)$ mit $J_0$ und Eintragen des Wertes $X_0(s) \cdot J_0 \bmod 2^k = Y_0(s)$ in ein viertes Register (18) und gleichzeitiges Verzögern von N' und X(s) um k Zyklen,

d) Berechnen eines Wertes $Z(s) = X(s) + Y_0(s) \cdot N'$ durch:

I - Multiplizieren von $Y_0(s)$ mit N', verzögert um k Zyklen, und

II - Bit-für-Bit-Addieren von X(s) zu dem Wert $Y_0(s) \cdot N'$,

e) Verwerfen des Wortes, das das geringste Gewicht hat von Z(s) und Abspeichern der übrigen Worte, d.h. $T(s)/2^k$ in dem dritten Register (11),

f) Bit-für-Bit-Vergleichen von $z(s)/2^k$ mit N', um den aktualisierten Wert S(s) der folgenden Iteration zu bestimmen, wie es oben beschrieben wurde, wobei dieser Vergleich durchgeführt wird durch Bit-für-Bit-Subtraktion von $Z(s)/2^k$ und N', wobei N' um zusätzliche k Zyklen verzögert wurde,

g) wobei das s-te Wort von C in das vierte Register (16) zu irgendeinem Zeitpunkt während der obigen Operationen geladen wird;

R3 - Ignorieren des Wortes mit dem geringsten Gewicht von Z(m') und eintragen der übrigen Worte, d.h. $z(m')/2^k$ in das erste Register (10) bei der m'-ten Iteration,

R4 - Ausgeben des Ergebnisses, das in dem ersten Register (19) bei der letzten Iteration abgelegt wurde, eventuell unter Subtraktion von N', falls notwendig,

R5 - Verschieben des Ergebnisses um a Bits nach links.

4. Verfahren nach einem der Ansprüche 2 oder 3, dadurch gekennzeichnet, daß man zum Erzeugen von H die folgenden Schritte durchführt:

H1 - Laden von Modulo N' in ein erstes Register (12) und Initialisieren eines zweiten Registers (10), wobei der Inhalt des zweiten Registers B(0) genannt wird,

H2 - Ausgeben von N' des ersten Registers (12) durch Verschieben nach rechts mit Rückschleifen an seinen Eingang um 1 - a Bits, wobei 1 die Zahl der verwendbaren Bits von N ist,

H3 - Erzeugen und Abspeichern einer Dateneinheit $B(1) = 2 \cdot (B(0) - N'')$, codiert auf n Bits mit $N'' = N' 2^{n-1+a}$ durch

- Ausgeben von N" und B(0) durch Verschieben nach rechts in dem ersten und zweiten Register (10, 12) des Inhalts dieser Register, wobei der Eingang des ersten Registers (12) mit seinem Ausgang verbunden ist,

- Bit-für-Bit-Subtraktion von Bits von N" und B(0) mit Verschieben nach links um eine Einheit des Ergebnisses, das mit R(0) = B(0) - N" bezeichnet wird,

- Ablegen des Ergebnisses der Subtraktion nach Verschieben, mit $B(1) = 2 \cdot R(0)$ bezeichnet, in das zweite Register (10),

- Bit-für-Bit-Subtraktion von B(1) und N", um zu bestimmen, ob $B(1) \geq$ oder $< N''$,

H4 - Erzeugen einer Dateneinheit $H_{int} = 2^t \bmod N''$ mit $t = n - l + a + u \cdot k + (m' - u) k/2^r$, wobei r eine ganze Zahl ist, so daß $k/2^r$ eine ganze Zahl ist, und u eine ganze Zahl ungleich Null ist, so daß $u \cdot k \geq l > (u - 1) \cdot k$ durch: Durchführen einer Schleife, die mit dem Index i indiziert ist, wobei i eine ganze Zahl zwischen 1 und t - n ist, wobei jede i-te Iteration die folgenden Operationen umfaßt :

- wenn B(i) < N", dann Laden in das zweite Register (10) von B(i + 1) = 2 · (B(i) - 0) = 2 x B(i) nach Verschieben nach links von B(i) um eine Einheit und Bit-für-Bit-Vergleichen von B(i+1) und N",
- anderenfalls Bit-für-Bit-Subtraktion von N" und B(i) mit Verschieben nach links um eine Einheit des Ergebnisses und Laden in das zweite Register von B(i+1) = 2 · (B(i) - N") und-Bit-für-Bit-Vergleichen von B (i+1) und N",

H5 - wenn B(t-n+1) $\geq$ N": Bit-für-Bit-Subtraktion von B(t-n+1) und N" und Laden in das Register (10) von B(t-n+1) - N",

H6 - Verschieben nach rechts um n - 1 + a Bits in dem ersten und zweiten Register (10, 12)

H7 - Durchführen von r $P_{field}$-Operationen:

$H_{int}(j) = P (H_{int}(j-1), H_{int}(j-1))_{N'}$ mit j als Index zwischen 1 und r, und $H_{int}(0) = B(t-n+1) \cdot 2^{l-n-a}$ H8 oder (B (t-n+1) - N") $\cdot 2^{l-n-a}$,

H8 - Erzeugen des Parameters H durch Durchführen einer $P_{field}$-Operation:

$$H = P (H_{int}(r) , 2^{u \cdot k-a})_{N'}.$$

5. Verfahren nach Anspruch 1, bei welchem N' = N, dadurch gekennzeichnet, daß man zum Erzeugen von C mod N die folgenden Schritte durchführt:

E1 - Erzeugen einer binären Dateneinheit N = $2^{m' \cdot k}$ mod N,

E3 - Ausgeben von C, codiert in m' k Bits, an den seriellen Eingang des Multiplikationsschaltkreises (19) und von H, codiert in n Bits, an den parallelen Eingang desselben Multiplikationsschaltkreises, um $P(C, H)_N$ = C mod N zu erhalten.

6. Verfahren nach Anspruch 5, dadurch gekennzeichnet, daß man zum Erzeugen von $P(C, H)_N$ = C mod N die folgenden Schritte durchführt:

R1 - Laden des Parameters H in ein erstes Register (10) und von Modulo N in ein zweites Register (12) und Initialisieren eines dritten Registers (11) auf Null, wobei der Inhalt dieses dritten Registers (11) mit S bezeichnet wird, wobei S eine variable binäre Dateneinheit ist, die auf n Bit codiert ist,

R2 - Durchführen einer Schleife, die mit s indiziert ist und bei der s zwischen 1 und m' variiert, wobei jede s-te Iteration die folgenden Operationen umfaßt :

a) Übertragen des s-ten Wortes $C_{s-1}$ von C in einem vierten Register (16) an einen parallelen Eingang des Multiplikationsschaltkreises,

b) Erzeugen eines Wertes $X(s) = S(s-1) + H \cdot S_{s-1}$ mit $S_0$ = 0 und S(s-1) als aktualisiert genannten Wert von S, das im Nachfolgenden definiert wird durch:

I - Verschieben nach rechts des Inhalts des ersten Registers (10) zum seriellen Eingang des Multiplikationsschaltkreises (19) mit Rückschleifen des Ausgangs dieses Registers an seinen Eingang,

II - Multiplizieren der Bits von H mit $C_{s-1}$,

III - Verschieben nach rechts des Inhalts des zweiten Registers (12) mit Rückschleifen des Ausgangs dieses Registers an seinen Eingang,

IV - Bestimmen des aktualisierten Wertes von S(s-1) als derjenige Wert, der in dem dritten Register (11) nach der (s-1)-ten Iteration abgelegt wurde, wenn dieser kleiner als N ist, und wenn er größer ist, indem seriell N von diesem abgezogen wird, wobei der Ergebniswert der aktualisierte Wert von S(s-1) ist, und

V - Verschieben nach rechts des Inhalts des dritten Registers (11) und Bit für Bit Addieren des Wertes der Multiplikation H · $C_{s-1}$ mit dem aktualisierten Wert von S(s-1),

c) Multiplizieren des Wortes mit dem geringsten Gewicht von X(s), $X_0(s)$ mit $J_0$ und Eingeben des Wertes $X_0(s) \cdot J_0$ mod $2^k$ = $Y_0(s)$ in ein viertes Register (18) und gleichzeitiges Verzögern von N und X(s) um k Zyklen,

d) Berechnen eines Wertes $Z(s) = X(s) + Y_0(s) \cdot N$ durch:

I - Multiplizieren von $Y_0(s)$ mit N, verzögert um k Zyklen, und

II - Bit-für-Bit-Addieren von X(s) zu dem Wert $Y_0(s) \cdot N$,

e) Verwerfen des Wortes mit dem geringsten Gewicht von Z(s) und Abspeichern der übrigen Worte, d.h. $Z(s)/2^k$ in einem dritten Register (11),

f) Bit-für-Bit-Vergleichen von $Z(s)/2^k$ mit N, um den aktualisierten Wert S(s) der folgenden Iteration zu bestimmen, wie es oben beschrieben wurde, wobei dieser Vergleich durch Bit-für-Bit-Subtraktion von z $(s)/2^k$ und N erfolgt, wobei N um zusätzliche k Zyklen verzögert ist,

g) wobei das s-te Wort von C in dem vierten Register (16) zu irgendeinem Zeitpunkt während der obigen Operationen abgelegt worden ist;

R3 - Ignorieren des Wortes mit dem geringsten Gewicht von Z(m') und Eintragen der übrigen Worte, d.h. z $(m')/2^k$ in das erste Register (10) bei der m'-ten Iteration,

R4 - Ausgeben des Ergebnisses, das in dem ersten Register (10) bei der letzten Iteration abgelegt worden ist, eventuell mit Subtraktion von N, falls notwendig.

**7.** Verfahren nach einem der Ansprüche 5 oder 6, dadurch gekennzeichnet, daß zum Erzeugen von H die folgenden Schritte durchgeführt werden:

H1 - Laden von Modulo N in ein erstes Register (12) und Initialisieren eines zweiten Registers (10), wobei der Inhalt des zweiten Registers B(0) genannt wird,

H2 - Ausgeben von N des ersten Registers (12) durch Verschieben nach rechts mit Rückschleifen an seinen Eingang um 1 Bits, wobei 1 die Zahl der verwendbaren Bits von N ist,

H3 - Erzeugen und Abspeichern einer Dateneinheit $B(1) = 2 \cdot (B(0) - N')$, codiert auf n Bits mit $N' = N \cdot 2^{n-1}$ durch

- Ausgeben von N' und B(0) durch Verschieben nach rechts in dem ersten und zweiten Register (10, 12) des Inhalts dieser Register, wobei der Eingang des ersten Registers (12) mit seinem Ausgang verbunden ist,
- Bit-für-Bit-Subtraktion von Bits von N' und B(0) mit Verschieben nach links um eine Einheit des Ergebnisses, das mit R(0) = B(0) - N' bezeichnet wird,
- Ablegen des Ergebnisses der Subtraktion nach Verschieben, mit $B(1) = 2 \cdot R(0)$ bezeichnet, in das zweite Register (10),
- Bit-für-Bit-Subtraktion von B(1) und N', um zu bestimmen, ob $B(1) \geq$ oder < N',

H4 - Erzeugen einer Dateneinheit $H_{int} = 2^t \bmod N'$ mit $t = n - l + u \cdot k + (m' - u) \cdot k/2^r$, wobei r eine ganze Zahl ist, so daß $k/2^r$ eine ganze Zahl ist, und u eine ganze Zahl ungleich Null ist, so daß $u \cdot k \geq l > (u-1) \cdot k$ durch: Durchführen einer Schleife, die mit dem Index i indiziert ist, wobei i eine ganze Zahl zwischen 1 und t - n ist, wobei jede i-te Iteration die folgenden Operationen umfaßt:

- wenn B(i) < N', dann Laden in das zweite Register (10) von $B(i+1) = 2 \cdot (B(i) - 0) = 2 \cdot B(i)$ nach Verschieben nach links von B(i) um eine Einheit und Bit-für-Bit-Vergleichen von B(i+1) und N',
- anderenfalls Bit-für-Bit-Subtraktion von N' und B(i) mit Verschieben nach links um eine Einheit des Ergebnisses und Laden in das zweite Register von $B(i+l) = 2 \cdot (B(i) - N')$ und Bit-für-Bit-Vergleichen von B (i+1) und N',

H5 - wenn $B(t-n+1) \geq N'$: Bit-für-Bit-Subtraktion von B(t-n+1) und N' und Laden in das Register (10) von B(t-n+1) - N',

H6 - Verschieben nach rechts um n - l Bits in dem ersten und zweiten Register (10, 12)

H7 - Erzeugen des Parameters H durch Durchführen von r $P_{field}$-Operationen:
$H_{int}(j) = P(H_{int}(j-1), H_{int}(j-1))_N$ mit j als Index zwischen 1 und r, und $H_{int}(0) = B(t-n+1) \cdot 2^{l-n}$ oder $(B(t-n+1) - N') \cdot 2^{l-n}$.

**8.** Verfahren nach Anspruch 1, dadurch gekennzeichnet, daß zum Erzeugen von C mod N, wobei das Bit mit dem geringsten Gewicht von N gleich 0 ist, die folgenden Schritte durchgeführt werden:

E1 - Durchführen einer Schleife, die mit i indiziert wird, wobei i zwischen 1 und m" - 1 variiert und m" eine ganze Zahl ist, so daß
$m" \cdot m \geq m' > (m" - 1) \cdot m$, und m die Bedingung erfüllt $n = m \cdot k$, wobei jede i-te Iteration die folgenden Operationen umfaßt:

- Erzeugen einer binären Dateneinheit $H_i = 2^{(i+1) \cdot n - a} \bmod N'$, codiert auf n Bits,

- Ausgeben von $H_i$ am seriellen Eingang des Multiplikationsschaltkreises (19) und Ausgeben einer Daten-einheit $C_i$, so daß $C = \Sigma_i\, C_i \cdot 2^{i \cdot n}$ am parallelen Eingang dieses gleichen Multiplikationsschaltkreises gilt, um $P(C_i, H_i)_{N'} = C_i \cdot 2^{i \cdot n - a} \bmod N'$ zu erhalten,
- Verschieben des Ergebnisses, um $C_i \cdot 2^{i \cdot n} \bmod N$ zu erhalten und Abspeichern dieses Ergebnisses,

E2 - Abspeichern von $C_0$, wenn $C_0 < N$, und von $C_0 - N$, wenn $C_0 \geq N$, für $i = 0$,
E3 - Erzeugen des gewünschten Ergebnisses durch modulare Addition der gespeicherten $C_i$ und $C_0$ oder $C_0 - N$.

9. Verfahren nach Anspruch 8, dadurch gekennzeichnet, daß zum Erzeugen von $H_i = 2^{(i+1) \cdot n - a} \bmod N'$ die folgenden Schritte durchgeführt werden:

- Erzeugen von $H_1 = 2^{2 \cdot n - a} \bmod N'$,
- bei $i > 1$:

   - Erzeugen von $H_{i,\,p(i)} = 2^{n + 2\exp(p(i)) \cdot (n-a)} \bmod N'$ mit $p(i) = \mathrm{Ent}[\log_2(i.n/(n-a))] + 1$, wobei Ent den Operator "ganzzahliger Anteil" bezeichnet,
   - bei $r > n$ Erzeugen von $2^{n-r} \bmod N'$,
   - Ausgeben von $H_{i,p(i)}$, wenn $n - r \geq 0$ (oder von $2^{n-r} \bmod N'$, wenn $n - r < 0$), in n Bits codiert, an den seriellen Eingang des Multiplikationsschaltkreises (19) und paralleles Ausgeben von $2^{n-r}$ (oder von $H_{i,p(i)}$, wenn $n - r < 0$), codiert in n Bits, an den parallelen Ausgang des gleichen Multiplikationsschaltkreises.

10. Verfahren nach Anspruch 1, dadurch gekennzeichnet, daß zum Erzeugen von C mod N, wobei das Bit mit dem geringsten Gewicht von N gleich 0 ist, die folgenden Schritte durchgeführt werden:

E1 - Durchführen einer Schleife, die mit i indiziert ist, wobei i zwischen 1 und w - 1 variiert, wobei w eine ganze Zahl ist, so daß
$w \cdot l \geq c > (w - 1) \cdot l$ und l die Zahl der verwendbaren Bits von N ist, wobei jede i-te Iteration die folgenden Operationen umfaßt:

- Erzeugen einer binären Dateneinheit $H_i = 2^{n + i \cdot l \cdot a} \bmod N'$, codiert in n Bits,
- Ausgeben von $H_i$ am seriellen Eingang des Multiplikationsschaltkreises (19) und Ausgeben einer Daten-einheit $C_i$, so daß $C = \Sigma_i\, C_i \cdot 2^{i \cdot l}$, an den parallelen Eingang des gleichen Multiplikationsschaltkreises, um $P(C_i, H_i)_{N'} = C_i \cdot 2^{i \cdot l \cdot a} \bmod N'$ zu erhalten,
- Verschieben des Ergebnisses, um $C_i \cdot 2^{i \cdot l} \bmod N$ zu erhalten, und Abspeichern dieses Ergebnisses,

E2 - bei $i = 0$ Abspeichern von $C_0$, wenn $C_0 < N$, und von $C_0 - N$, wenn $C_0 \geq N$,
E3 - Erzeugen des gewünschten Ergebnisses durch modulare Addition von $C_i$, die abgespeichert sind, und $C_0$ oder $C_0 - N$.

11. Verfahren nach Anspruch 10, dadurch gekennzeichnet, daß zum Erzeugen von $H_i = 2^{n + i \cdot l \cdot a} \bmod N'$ die folgenden Schritte durchgeführt werden:

- Erzeugen von $H_1 = 2^{n + l \cdot a} \bmod N'$,
- bei $i > 1$:

   - Erzeugen von $H_{i,p(i)} = 2^{n + 2\exp(p(i)) \cdot (l-a)} \bmod N'$ mit $p(i) = \mathrm{Ent}[\log_2(i \cdot l/(l-a))] + 1$, wobei Ent den Operator "ganzzahliger Teil" bezeichnet,
   - bei $r > n$ Erzeugen von $2^{n-r} \bmod N'$,
   - Ausgeben von $H_{i,p(i)}$ bei $n - r \geq 0$ (oder von $2^{n-r} \bmod N'$, wenn $n - r < 0$), codiert in n Bits, an den seriellen Eingang des Multiplikationsschaltkreises (19) und parallel Ausgeben von $2^{n-r}$ (oder von $H_{i,p(i)}$, wenn $n - r < 0$), codiert in n Bits, an den parallelen Eingang des gleichen Multiplikationsschaltkreises.

**Claims**

1. Method for implementing modular reduction according to the Montgomery method, applied to an integrated circuit, in which:

- a binary data item C is coded in a number c of bits, grouped together in m' words of k bits, with m' and k integer, m' being such that $m' * k \geq c > (m' - 1) * k$,

- a non-null binary data item N is coded in a number n of bits,

characterised in that, in order to produce C mod N, steps of producing a binary data item $J_0(N') = -N'_0{}^{-1}$ mod $2^k$ are implemented, with N' a binary data item coded in n bits such that N' has a least significant bit at 1 and $N = N' * 2^a$, with a integer $\geq 0$, producing at least one binary data item H of the form $2^{f(C,N)}$, with f(C, N) an integer representing the size of C and the number of least significant bits of N which are at 0, and supplying on the one hand C, at the parallel input of a multiplier circuit (19) having a serial input, a parallel input and a serial output, and on the other hand H at the serial input of this same multiplier circuit.

**2.** Method according to Claim 1, characterised in that, in order to produce C mod N, the least significant bit of N being equal to 0, the following steps are carried out:

E1 - producing a binary data item $H = 2^{m'*k-a}$ mod N',

E3 - supplying C, coded in m' * k bits, at the parallel input of the multiplier circuit (19), and H, coded in n bits, at the serial input of this same multiplier circuit, in order to obtain a data item $P(C, H)_{N'} = C * 2^{-a}$ mod N',

E4 - producing $2^a * P(C, H)_{N'} = $ mod N.

**3.** Method according to Claim 2, characterised in that, in order to produce $P(C, H)_{N'} = C * 2^{-a}$ mod N', the following steps are implemented:

R1 - loading the parameter H into a first register (10) and the modulo N' into a second register (12), and initialising a third register (11) to zero, the content of this third register (11) being denoted S, with S a binary variable data item coded in n bits,

R2 - implementing a loop, indexed by s, with s varying from 1 to m', each $s^{th}$ iteration comprising the following operations:

a) transferring the $s^{th}$ word $C_{s-1}$ of C from a fourth register (16) to the parallel input of the multiplier circuit,

b) producing a value $X(s) = S(s-1) + H * C_{s-1}$ with $S(0) = 0$ and $S(s-1)$ the so-called updated value of S, defined below, by:

I - shifting to the right the content of the first register (10) towards the serial input of the multiplier circuit (19), with looping back of the output of this register onto its input,

II - multiplying the bits of Hi by $C_{s-1}$,

III shifting to the right the content of the second register (12), with looping back of the output of this register onto its input,

IV - determining the updated value of S(s-1) as being the value stored in the third register (11) after the $(s-1)^{th}$ iteration, if this is less than N', and if it is greater, subtracting N' serially therefrom, the value resulting therefrom being the updated value of S(s-1), and

V - shifting to the light the content of the third register (11) and adding bit by bit the value of the multiplication $H * C_{s-1}$ with the updated value of S(s-1),

c) multiplying the least significant word of X(s), $X_0(s)$, by $J_0$, and inputting the value $X_0(s) * J_0$ mod $2^k = Y_0(s)$ into a fourth register (18) and simultaneously delaying N' and X(s) by k cycles,

d) calculating a value $Z(s) = X(s) + Y_0(s) * N'$ by:

I - multiplying $Y_0(s)$ by N', delayed by k cycles, and

II - adding $X(s)$ to the value $Y_0(s) * N'$ bit by bit,

e) not taking account of the least significant word of $Z(s)$ and storing the remaining words, that is to say $z(s)/2^k$, in the third register (11),

f) comparing $z(s)/2^k$ with N', bit by bit, for the purpose of determining the updated value $S(s)$ of the following iteration, as described above, this comparison being performed by subtracting $z(s)/2^k$ and N', N' having been delayed by k additional cycles,

g) the $s^{th}$ word of C being loaded into the fourth register (16) at any moment during the above operations;

R3 - at the $m'^{th}$ iteration, ignoring the least significant word of $Z(m')$ and entering the remaining words, that is to say $Z(m')/2^k$, into the first register (10),

R4 - outputting the result stored in the first register (10) at the last iteration, possibly with N' subtracted if necessary,

R5 - shifting the result by a bits to the left.

4. Method according to one of Claims 2 to 3, characterised in that, in order to produce H, the following steps are implemented:

H1 - loading the modulo N' into a first register (12), and initialising a second register (10), the content of the second register being denoted $B(0)$,

H2 - outputting N' from the first register (12) by shifting to the right, with looping back onto its input, by l-a bits, with l the number of useful bits of N,

H3 - producing and storing a data item $B(1) = 2 * (B(0) - N'')$, coded in n bits, with $N'' = N' * 2^{n-l+a}$, by:

- outputting N'' and B(0) by shifting to the right in the first and second registers (10, 12) the content of these registers, the input of the first register (12) being connected to its output,

- subtracting the bits of N'' and B(0) bit by bit, with shifting of the result, denoted $R(0) = B(0) - N''$, to the left by one unit,

- loading the result of the subtraction after shifting, denoted $B(1) = 2 * R(0)$, into the second register (10),

- subtracting B(1) and N'' bit by bit in order to determine whether B(1) is $\geq$ or $<$ N'',

H4 - producing a data item $H_{int} = 2^t \bmod N''$, with $t = n - l + a + u * k + (m' - u) * k/2^r$, with r an integer such that $k/2^r$ is integer, and u a non-null integer such that $u * k \geq l > (u - 1) * k$, by:

implementing a loop indexed by an index i, i an integer from 1 to t-n, each $i^{th}$ iteration comprising the following opertions :

- if $B(i) < N''$ then loading $B(i+1) = 2 * (B(i)-0) = 2 * B(i)$ into the second register (10) after shifting B(i) to the left by one unit, and comparing B(i+1) and N'' bit by bit,

- otherwise subtracting N'' and B(i) bit by bit, with shifting of the result to the left by one unit and loading of $B(i+1) = 2 * (B(i) - N'')$ into the second register, and comparing B(i+1) and N'' bit by bit,

H5 - if $B(t-n+1) \geq N''$: subtracting B(t-n+l) and N'' bit by bit, and loading B(t-n+1) - N'' into the register 10,

H6 - shifting to the right by n - l + a bits in the first and second registers (10, 12),

H7 - implementing r $P_{field}$ operations:

$H_{int}(j) = P(H_{int}(j-1), H_{int}(j-1))_{N'}$ with j an index from 1 to r, and $H_{int}(0) = B(t-n+1) * 2^{l-n-a}$ or $(B(t-n+1) - N'') * 2^{l-n-a}$,

H8 - producing the parameter H by implementing a $P_{field}$ operation:

$H = P (H_{int} (r), 2^{u*k-a})_{N'}$

5. Method according to Claim 1, in which N' = N, characterised in that, in order to produce C mod N, the following steps are carried out:

E1. - producing a binary data item $H = 2^{m'*k} \bmod N'$,

E3 - supplying C, coded in m' * k bits, at the parallel input of the multiplier circuit (19), and H, coded in n bits, at the serial input of this same multiplier circuit, in order to obtain $P(C, H)_N = C \bmod N$,

6. Method according to Claim 5, characterised in that, in order to produce $P(C, H)_N = C \bmod N$, the following steps are implemented:

R1 - loading the parameter H into a first register (10) and the modulo N into a second register (12), and initialising a third register (11) to zero, the content of this third register (11) being denoted S, with S a binary variable data item coded in n bits,

R2 - implementing a loop, indexed by s, with s varying from 1 to m', each $s^{th}$ iteration comprising the following operations:

a) transferring the $s^{th}$ word $C_{s-1}$ of C from a fourth register (16) to the parallel input of the multiplier circuit,

b) producing a value $X(s) = S(s-1) + H * C_{s-1}$ with $S(0) = 0$ and $S(s-1)$ the so-called updated value of S, defined below, by:

I - shifting to the right the content of the first register (10) towards the serial input of the multiplier circuit (19), with looping back of this output of this register onto its input,

II - multiplying the bits of H by $C_{s-1}$,

III - shifting to the right the content of the second register (12), with looping back of the output of this register onto its input,

IV - determining the updated value of S(s-1) as being the value stored in the third register (11) after the (s-1)th iteration, if this is less than N, and if it is greater, subtracting N serially therefrom, the value resulting therefrom being the updated values of S(s-1), and

V - shifting to the right the content of the third register (11) and adding bit by bit the value of the multiplication $H * C_{s-1}$ with the updated value of S(s-1),

c) multiplying the least significant word of X(s), $X_0(s)$, by $J_0$, and inputting the value $X_0(s) * J_0 \bmod 2^k = Y_0(s)$ into a fourth register (18) and simultaneously delaying N and X(s) by k cycles,

d) calculating a value $Z(s) = X(s) + Y_0(s) * N$ by:

I - multiplying $Y_0(s)$ by N, delayed by k cycles, and

II - adding X(s) to the value $Y_0(s) * N$ bit by bit,

e) not taking account of the least significant word of Z(s) and storing the remaining words, that is to say $Z(s)/2^k$, in the third register (11),

f) comparing $Z(s)/2^k$ with N, bit by bit, for the purpose of determining the updated value S(s) of the following iteration, as described above, this comparison being performed by subtracting $z(s)/2^k$ and N bit by bit, N having been delayed by k additional cycles,

g) the $s^{th}$ word of C being loaded into the fourth register (16) at any moment during the above operations;

R3 - at the $m'^{th}$ iteration, ignoring the least significant word of Z(m') and entering the remaining words, that is to say $Z(m')/2^k$, into the first register (10),

R4 - outputting the result stored in the first register (10) at the last iteration, possibly with N subtracted if necessary.

7. Method according to one of Claims 5 to 6 , characterised in that, in order to produce H, the following steps are implemented:

H1 - loading the modulo N into a first register (12), and initialising a second register (10), the content of the second register being denoted B(0),

H2 - outputting N from the first register (12) by shifting to the right, with looping back onto its input, by l bits, l being the number of useful bits of N,

H3 - producing and storing a data item $B(1) = 2 * (B(0) - N')$, coded in n bits, with $N' = N * 2^{n-1}$, by:

- outputting N' and B(0) by shifting to the right in the first and second registers (10, 12) the content of these registers, the input of the first register (12) being connected to its output,

- subtracting bits of N' and B(0) bit by bit, with shifting of the result, denoted $R(0) = B(0) - N'$, to the left by one unit, - loading the result of the subtraction after shifting, denoted $B(1) = 2 * R(0)$, into the second register (10),

subtracting B(1) and N' bit by bit in order to determine whether B(1) is $\geq$ or $< N'$,

H4 - producing a data item $H_{int} = 2^t \bmod N'$, with $t = n - l + u * k + (m' - u) * k/2^r$, with r an integer such that $k/2^r$ is integer, and u a non-null integer such that $u * k \geq l > (u - 1) * k$, by:
supplementing a loop indexed by an index i, i an integer from 1 to t-n, each $i^{th}$ alteration comprising the following operations:

- if $B(i) < N'$ then loading $B(i+1) = 2 * (B(i) - 0) = 2 * B(i)$ into the second register (10) after shifting B(i) to the left by one unit, and comparing B(i+1) and N' bit by bit,

- otherwise subtracting N' and B(i) bit by bit, with shifting of the result to the left by one unit and loading of $B(i+1) = 2 * (B(i) - N')$ into the second register, and comparing B(i+1) and N' bit by bit,

H5 - if $B(t-n+1) \geq N'$: subtracting B(t-n+1) and N' bit by bit, and loading B(t-n+1) - N' into the register (10),

H6 - shifting to the right by n - l bits in the first and second registers (10, 12),

H7 - producing the parameter H by implementing r $P_{field}$ operations:

$H_{int}(j) = P(H_{int}(j-1), H_{int}(j-1))_N$ with j an index from 1 to r, and $H_{int}(0) = B(t-n+1) * 2^{l-n}$ or $(B(t-n+1) - N') * 2^{l-n}$,

8. Method according to Claim 1, characterised in that, in order to produce C mod N, the least significant bit of N being equal to 0, the following steps are carried out:

E1 - implementing a loop, indexed by i, with i varying from one to m" - 1, with m" an integer number such that $m" * m \geq m' > (m" - 1) * m$, m being such that $n = m * k$, each $i^{th}$ iteration comprising the following operations:

- producing a binary data item $H_i = 2^{(i+1)*n-a} \bmod N'$ coded in n bits,

- supplying $H_i$ at the serial input of the multiplier circuit (19) and supplying a data item $C_i$ such that $C = \Sigma_i$

$C_i * 2^{i*n}$ at the parallel input of this same multiplier circuit in order to obtain $P(C_i, H_i)_{N'} = C_i * 2^{i*n-a} \bmod N'$,

- shifting the result in order to obtain $C_i * 2^{i*n} \bmod N$ and storing this result,

E2 - for i = 0, storing $C_0$ if $C_0 < N$, and $C_0$ - n if $C_0 \geq N$,

E3 - producing the required result by modular addition of the $C_i$ values stored and $C_0$ or $C_0$ - N.

9. Method according to Claim 8, characterised in that, in order to produce $H_i = 2^{2*n-a} \bmod N'$, the following steps are implemented:

- producing $H_I = 2^{2*n-a} \bmod N'$,

- for i > 1:

- producing $H_{i,p(i)} = 2^{n+2exp(p(i))*(n-a)} \bmod N'$ with p(i) = Int $[\log_2(i*n/(n-a))] + 1$, Int designating the "integer part" operator,

- If r > n, producing $2^{n-r} \bmod N'$,

- supplying $H_{i,p(i)}$ if n - r $\geq$ 0 (or $2^{n-r} \bmod N'$ if n - r < 0), coded in n bits, at the serial input of the multiplier circuit (19), and at the same time supplying $2^{n-r}$ (or $H_{i,p(i)}$ if n-r < 0) coded in n bits, at the parallel input of this same multiplier circuit.

10. Method according to Claim 1, characterised in that, in order to produce C mod N, the least significant bit of N being equal to 0, the following steps are carried out :

E1 - implementing a loop, indexed by i, with i varying from one to w - 1, with w an integer such that w * l $\geq$ c > (w - 1) * l, l being the number of useful bits of N, each $i^{th}$ iteration comprising the following operations :

- producing a binary data item $H_i = 2^{n+1^{*}l-a} \bmod N'$ coded in n bits,

- supplying $H_i$ at the serial input of the multiplier circuit (19) and supplying a data item $C_i$ such that C = $\Sigma_i$ $C_i * 2^{i*l}$ at the parallel input of this same multiplier circuit in order to obtain $P(C_i, H_i)_{N'} = C_i * 2^{i*l-a} \bmod N'$,

- shifting the result in order to obtain $C_i * 2^{i*l} \bmod N$ and storing this result,

E2 - for i = 0, storing $C_0$ if $C_0 < N$, and $C_0$ - N if $C_0 \geq N$,

E3 - producing the required result by modular addition of the $C_i$ values stored and $C_0$ or $C_0$ - N.

11. Method according to Claim 10, characterised in that, in order to produce $H_i = 2^{°n+i*l-a} \bmod N'$, the following steps are implemented:

- producing $H_I = 2^{n+l-a} \bmod N'$,

- for i > 1:

- producing $H_{i,p(i)} = 2^{n+2exp(p(i))*(l-a)} \bmod N'$, with P(i) = Int$[\log_2(i*l/(l-a))] + 1$, Int designating the "integer part" operator,

- If r > n, producing $2^{n-r} \bmod N'$,

- supplying $H_{i,p(i)}$ if n - r $\geq$ 0 (or $2^{n-r} \bmod N'$ if n - r < 0), coded in n bits, at the serial input of the multiplier circuit (19) and at the same time supplying $2^{n-r}$ (or $H_{i,p(i)}$ if n-r < 0), coiled in n bits, at the parallel input of this same multiplier circuit.

# FIG_1

EP 0 712 072 B1

# FIG_2